# EUROPEAN PATENT SPECIFICATION

(11) **EP 4 526 876 B1**
(45) Date of publication and mention of the grant of the patent: **07.10.2026**
(21) Application number: 22734722.6
(22) Date of filing: 19.05.2022
(51) Int. Cl.: G10L 25/30, G06N 3/08, G06N 20/00, G06N 3/045, G06N 3/091

(54) **PRIVACY PRESERVING METHODS, SYSTEMS, AND MEDIA FOR PERSONALIZED SOUND DISCOVERY WITHIN AN ENVIRONMENT**
DATENSCHUTZBEWAHRENDE VERFAHREN, SYSTEME UND MEDIEN ZUR PERSONALISIERTEN TONENTDECKUNG IN EINER UMGEBUNG
PROCÉDÉS, SYSTÈMES ET SUPPORTS DE PRÉSERVATION DE CONFIDENTIALITÉ POUR DÉCOUVERTE DE SON PERSONNALISÉE DANS UN ENVIRONNEMENT

(43) Date of publication of application: 26.03.2025
(73) Proprietor: GOOGLE LLC, Mountain View CA 94043 (US)
(72) Inventor: NONGPIUR, Rajeev, Conrad, Mountain View, CA 94043 (US); WANG, Wendell, Kitchener, ON N2G 1H6 (CA); SAVLA, Sagar, Mountain View, CA 94043 (US); ZHANG, Qian, Mountain View, CA 94043 (US); VACHOVSKY, Marie, Mountain View, CA 94043 (US); CHEN, Linkun, Mountain View, CA 94043 (US); SIM, Khe, Chai, Mountain View, CA 94043 (US); LI, Jihan, Mountain View, CA 94043 (US); ELLIS, Daniel, P.w., Mountain View, CA 94043 (US); KIM, Byungchul, Mountain View, CA 94043 (US); JANSEN, Aren, Mountain View, CA 94043 (US); SAMANTA, Anupam, Mountain View, CA 94043 (US); CHUNG, Ben, Taipei 101 Tower 7 Xinyi Road, Sec. 5, Taipei, 110 (TW); HUANG, Alex, Taipei 101 Tower 7 Xinyi Road, Sec 5, Taipei, 110 (TW); CHANG, Ausmus, Taipei 101 Tower 7 Xinyi Road, Sec 5, Taipei, 110 (TW); ZHOU, George, Mountain View, CA 94043 (US)
(74) Representative: Maikowski & Ninnemann Patentanwälte Partnerschaft mbB
(86) International application number: PCT/US2022/030026
(87) International publication number: WO 2023/224622

(56) References cited:
- US-A1- 2022 027 725
- AKBARI ALI ET AL: "Personalizing Activity Recognition Models Through Quantifying Different Types of Uncertainty Using Wearable Sensors", IEEE TRANSACTIONS ON BIOMEDICAL ENGINEERING, IEEE, USA, vol. 67, no. 9, 2 January 2020 (2020-01-02), pages 2530 - 2541, XP011805651, ISSN: 0018-9294, [retrieved on 20200819], DOI: 10.1109/TBME.2019.2963816
- JAIN DHRUV DJAIN@CS WASHINGTON EDU ET AL: "ProtoSound: A Personalized and Scalable Sound Recognition System for Deaf and Hard-of-Hearing Users", CHI CONFERENCE ON HUMAN FACTORS IN COMPUTING SYSTEMS, ACM, NEW YORK, NY, USA, 29 April 2022 (2022-04-29), pages 1 - 16, XP058797287, ISBN: 978-1-4503-9157-3, DOI: 10.1145/3491102.3502020

## Description

### Cross-Reference to Related Applications

This application is related to U.S. Patent Application No. 16/940,294, entitled "SOUND MODEL LOCALIZATION WITHIN AN ENVIRONMENT," filed on July 27, 2020.

### Technical Field

The disclosed subject matter relates to privacy-preserving methods, systems, and media for personalized sound discovery within an environment.

### Background

Pre-trained sound models may be used in conjunction with machine learning systems to detect specific sounds recorded by microphones in an environment. A pre-trained sound model may be a generic model trained with examples of the specific sound the model is meant to detect. The examples may be obtained from any of a variety of sources, and may represent any number of variations of the sound the pre-trained sound model is being trained to detect. The pre-trained sound models may be trained outside of an environment before being stored on the devices in an environment and operated to detect the sounds they were trained to detect. Devices may receive the same pre-trained sound models regardless of the environment the devices end up operating in. The pre-trained sound models may be replaced with updated versions of themselves generated outside the environments in which the pre-trained sound models are in use.

Accordingly, it is desirable to provide new mechanisms for personalized sound discovery within an environment.

US 2022/027725 A1 relates to systems and techniques for sound model localization within an environment. Sound recordings of sounds in the environment may be received from devices in the environment. Preliminary labels for the sound recordings may be determined using pre-trained sound models. The preliminary labels may have associated probabilities. Sound clips with preliminary labels may be generated based on sound recordings that have preliminary labels whose probability is over a high-recall threshold for the pre-trained sound model that determined the preliminary label. The sound clips with preliminary labels may be sent to a user device. Labeled sound clips may be received from the user device. The labeled sound clips may be based on the sound clips with preliminary labels. Training data sets may be generated for the pre-trained sound models using the labeled sound clips. The pre-trained sound models may be trained using the training data sets to generate localized sound models.

### Summary

The invention is defined by the independent claims 1,14 and 15. Features of exemplary embodiments are apparent from the dependent claims.

### Brief Description of the Drawings

The accompanying drawings, which are included to provide a further understanding of the disclosed subject matter, are incorporated in and constitute a part of this specification. The drawings also illustrate embodiments of the disclosed subject matter and together with the detailed description serve to explain the principles of embodiments of the disclosed subject matter. No attempt is made to show structural details in more detail than may be necessary for a fundamental understanding of the disclosed subject matter and various ways in which it may be practiced.
FIG. 1 shows an example system and arrangement suitable for sound model localization and personalized sound discovery within an environment according to an implementation of the disclosed subject matter.
FIG. 2A shows an example system and arrangement suitable for sound model localization and personalized sound discovery within an environment according to an implementation of the disclosed subject matter.
FIG. 2B shows an example system and arrangement suitable for sound model localization and personalized sound discovery within an environment according to an implementation of the disclosed subject matter.
FIG. 3 shows an example system and arrangement suitable for sound model localization and personalized sound discovery within an environment according to an implementation of the disclosed subject matter.
FIG. 4A shows an example system and arrangement suitable for sound model localization and personalized sound discovery within an environment according to an implementation of the disclosed subject matter.
FIG. 4B shows an example system and arrangement suitable for sound model localization and personalized sound discovery within an environment according to an implementation of the disclosed subject matter.
FIG. 5 shows an example system and arrangement suitable for sound model localization and personalized sound discovery within an environment according to an implementation of the disclosed subject matter.
FIG. 6 shows an example system and arrangement suitable for sound model localization and personalized sound discovery within an environment according to an implementation of the disclosed subject matter.
FIG. 7 shows an example process suitable for sound model localization and personalized sound discovery within an environment according to an implementation of the disclosed subject matter.
FIG. 8 shows an example process suitable for sound model localization within an environment according to an implementation of the disclosed subject matter.
FIG. 9 shows an example process suitable for sound model localization within an environment according to an implementation of the disclosed subject matter.
FIG. 10 shows an example process suitable for sound model localization within an environment according to an implementation of the disclosed subject matter.
FIG. 11 shows an example process suitable for sound model localization within an environment according to an implementation of the disclosed subject matter.
FIG. 12 shows an example system and arrangement suitable for personalized sound discovery within an environment according to an implementation of the disclosed subject matter.
FIG. 13 shows an example of detection modes that each have one or more sound classes that a multi-class sound model is trained to detect according to an implementation of the disclosed subject matter.
FIG. 14 shows an example of detection modes that have overlapping sound classes according to an implementation of the disclosed subject matter.
FIG. 15 shows an example of a personalization module that includes fine-tuning layers for personalized sound discovery according to an implementation of the disclosed subject matter.
FIG. 16 shows an example process for implementing a personalization module that includes fine-tuning layers for personalized sound discovery according to an implementation of the disclosed subject matter.
FIG. 17 shows an example process suitable for updating the personalization module according to an implementation of the disclosed subject matter.
FIG. 18 shows an example of a personalization module that performs a distance measurement for personalized sound discovery according to an implementation of the disclosed subject matter.
FIG. 19 shows an example process for implementing a personalization module for personalized sound discovery according to an implementation of the disclosed subject matter.
FIG. 20 shows an example process suitable for updating the personalization module according to an implementation of the disclosed subject matter.
FIG. 21 shows a computing device according to an embodiment of the disclosed subject matter.
FIG. 22 shows a system according to an embodiment of the disclosed subject matter.
FIG. 23 shows a system according to an embodiment of the disclosed subject matter.
FIG. 24 shows a computer according to an embodiment of the disclosed subject matter.
FIG. 25 shows a network configuration according to an embodiment of the disclosed subject matter.

### Detailed Description

According to embodiments disclosed herein, sound model localization within an environment may allow for sound models that have been pre-trained to be further trained within an environment to better detect sounds in that environment. Sound models, which may be pre-trained, may be stored on devices in an environment. Devices with microphones in the environment may record sounds that occur within the environment. The sounds may be recorded purposefully by a user, or may be recorded automatically by the devices with microphones. A user may label the sounds they purposefully record, and sounds recorded automatically may be presented to the user so that the user may label the sounds. Sounds recorded automatically may also be labeled by one of the sound models running on the devices in the environment. The labeled sounds recorded in the environment may be used to further train the sound models in the environment, localizing the sound models to the environment. Training of the sound models may occur on individual devices within the environment, and may be distributed across the devices within the environment. The recorded sounds used for training may remain within the environment, preventing sensitive data from being transmitted or stored outside of the environment during the training of the sound models.

An environment may include a number of devices. The environment may be, for example, a home, office, apartment, or other structure, outdoor space, or combination of indoor and outdoor spaces. Devices in the environment may include, for example, lights, sensors including passive infrared sensors used for motion detection, light sensors, cameras, microphones, entryway sensors, light switches, as well as mobile device scanners that may use Bluetooth, WiFi, RFID, or other wireless devices as sensors to detect the presence of devices such as phones, tablets, laptops, or fobs, security devices, locks, A/V devices such as TVs, receivers, and speakers, devices for HVAC systems such as thermostats, motorized devices such as blinds, and other such controllable device. The devices may also include general computing devices, such as, for example, phones, tablets, laptops, and desktops. The devices within the environment may include computing hardware, including processors, volatile and non-volatile storage, and communications hardware for wired and wireless network communication, including WiFi, Bluetooth, and any other form of wired or wireless communication. The computing hardware in the various devices in the environment may differ. The devices in the environment may be connected to the same network, which may be any suitable combination of wired and wireless networks, and may involve mesh networking, hub-and-spoke networking, or any other suitable form of network communications. The devices in the environment may be members of an environment-specific network. A device may need to be authorized by a user, for example, a non-guest occupant of the environment, to become a member of the environment-specific network. The environment-specific network may be more exclusive than a local area network (LAN) in the environment. For example, the environment may include a Wi-Fi router that may establish a Wi-Fi LAN in the environment, and may also allow devices connected to the Wi-Fi LAN to connect to a wide area network (WAN) such as the Internet. Devices that are granted access to the Wi-Fi LAN in the environment may not be automatically made members of the environment-specific network, and may need to be authorized by a non-guest occupant of the environment to join the environment-specific network. This may allow guest devices to use a LAN, such as a Wi-Fi LAN, in the environment, while preventing the guest device from joining the environment-specific network. Membership in the environment-specific network may be managed within the environment, or may be managed using a cloud server system remote from the environment.

Some of the devices in the environment may include microphones. The microphones may be used to record sounds within the environment. The recorded sounds may be processed using any number of sound models, which may attempt to detect specific sounds in the recorded sounds. This may occur, for example, in real-time, as detected sounds may be used to determine data about the current state of the environment, such as, for example, the number, identity, and status of current occupants of the environment, including people and animals, and the operating status of various features of the environment, including doors and windows, appliances, fixtures, and plumbing. Individual sound models may be trained to detect different individual sounds, and each sound model may be labeled with the sound it has been trained to detect. For example, a sound model labeled "doorbell" may detect doorbells, another sound model labeled "closing door" may detect a door closing, and another sound model labeled "cough" may detect a person coughing. There may be sound models that detect, for example, coughing, snoring, sneezing, voices, pet noises, leaking water, babies crying, toilets flushing, sinks running, showers running, dishwashers running, refrigerators running, and any other sound that may occur within an environment such as a home. The sound models may be models for any suitable machine learning system, such as a Bayesian network, artificial neural network, support vector machine, classifier of any type, or any other suitable statistical or heuristic machine learning system type. For example, a sound model may include the weights and architecture for a neural network of any suitable type.

The sound models initially used by the devices in an environment may be pre-trained sound models which may be generic to the sounds they are meant to detect and identify. The sound models may have been pre-trained, for example, using sound datasets that were donated or synthesized. For example, a sound model to detect a doorbell may be pre-trained using examples of various types of doorbells and other sounds that could possibly be used as a doorbell sound, such as music. A sound model to detect a cough may be pre-trained using examples of coughs from various different people, none of whom may have any connection to the environment the sound model will operate in. The sound models may be stored on the devices as part of the manufacturing process, or may be downloaded to the devices from a server system after the devices are installed in an environment and connected to the Internet. Any number of sound models may be operating in the environment at any time, and sound models may be added to or removed from the devices in the environment at any time and in any suitable manner. For example, five hundred or more sound models may be operating in the same environment, each detecting a different sound.

Devices with microphones in the environment may record sounds that occur within the environment to generate sound clips. The sounds may be recorded purposefully by a user. For example, a user in the environment may use a phone to purposefully record sounds of interest, generating sound clips of those sounds. The user may use any suitable device with a microphone to record sounds, including, for example, phones, tablets, laptops, and wearable devices.

Sounds may also be recorded automatically by devices in the environment without user intervention. For example, devices in the environment with microphones may record sounds and process them with sound models in real time as each sound model determines if the sound it is trained to detect is in the recorded sound. To process a recorded sound with a sound model, the recorded sound may be input to a machine learning system that may be using the sound model. For example, the recorded sound may be input to a machine learning system for a neural network using weights and architecture from a sound model, with the recorded sound input to the input layer of the sound model. The recorded sound may be prepared in any suitable manner to be processed by a sound model, including, for example, being filtered, adjusted, and converted into an appropriate data type for input to the sound model and the machine learning system that uses the sound model.

The sound models may be operated in high-recall mode to generate sound clips from the sounds processed by the sound models. When a sound model is operating in high recall mode, the probability threshold used to determine whether the sound model has detected that sound it was trained to detect may be lowered. For example, a sound model for a door opening may use a probability threshold of 95% during normal operation, so that it may only report a sound processed by the sound model as being the sound of a door opening when the output of the sound model is probability of 95% or greater that the sound processed by the sound model includes the sound of a door opening. A sound model operating in high-recall mode may use a lower high-recall probability threshold of, for example, around 50%, resulting in the sound model reporting more recorded sounds processed by the sound model as including the sounds of a door opening. Operating a sound model in a high-recall mode may result in the generation of more sound clips of recorded sounds that are determined to be the sound the sound model was trained to detect, although some of these sounds may end up not actually being the sound the sound model was trained to detect. For example, operating the sound model for the door opening in high-recall mode may result in the sound model determining that sounds that are not a door opening as being the sound of a door opening. This may allow for the generation of more sound clips for the sound model that may serve as both positive and negative training examples when compared to operating the sound model in a normal mode with a high probability threshold, and may generate better positive training examples for edge cases of the sound the sound model is trained to detect.

One of the sound models used in the environment may be an interesting sound classifier. The sound model for an interesting sound classifier may be trained to detect any sounds that may be considered interesting, for example, any sound that does not appear to be ambient or background noise. The sound model for the interesting sound classifier may generate sound clips from sounds recorded in the environment that the sound model determines are interesting. The sound model for the interesting sound classifier may operate using a normal probability threshold, or may operate in high-recall mode.

Sound clips generated from automatically recorded sounds may be given preliminary labels. The preliminary label for a sound clip may be based on the label of the sound model that determined that the probability that the sound in the sound clip was the sound the sound model was trained to detect exceeded the probability threshold, whether normal or high-recall, in use by the sound model. The preliminary label given to a sound clip by a sound model may be the label of the sound model. For example, a sound model for door opening may determine that there is a 65% probability that a recorded sound processed with the sound model is the sound of a door opening. If the sound model for door opening is operating in high-recall mode with a probability threshold of 50%, the recorded sound may be used to generate a sound clip that may be assigned a preliminary label of "door opening", which may also be the label of the sound model.

The same sound clip may be given multiple preliminary labels. Every recorded sound may be processed through all of the available sound models on devices in the environment, even when the sound models are operating on devices different from the devices that recorded the sound. For some recorded sounds, multiple sound models may determine that the probability that the recorded sound is the sound the sound model was trained to detect exceeds the probability threshold in use by that sound model. This may result in the sound clip generated from the recorded sound being given multiple preliminary labels, for example, one label per sound model that determined the recorded sound was the sound the sound model was trained to detect.

Some recorded sounds may not have any of the sound models determine that the probability that the recorded sound is the sound the sound model is trained to detect exceeds the probability threshold in use by the sound model. These recorded sounds may be discarded, or may be used to generate sound clips that may be given a preliminary label indicating that the sound is unknown.

The sound clips generated from recorded sounds in the environment may be stored in any suitable manner. For example, sound clips may be stored on the devices responsible for recording the sound that was processed by the sound model, on the device responsible for processing the recorded sound with the sound model if it is different from the device that recorded the sound, or on any other device in the environment. For example, all of the sound clips may be stored on a single device in the environment, for example, the device with the greatest amount of available non-volatile storage. This device may also be responsible for operating all, or many, of the sound models, as the device may also have the most available processing power of the devices in the environment. Sound clips generated from automatically recorded sounds that were input to the sound models may be stored along with their preliminary labels.

Sound clips may only be stored on devices that are members of the environment-specific network. This may prevent sound clips generated from sound recorded within the environment from being stored on devices that are guests within the environment and have not been authorized by a non-guest occupant of the environment to join the environment-specific network.

The sound clips generated from recording sounds in the environment may be labeled. Sound clips purposefully recorded by a user may be labeled by the user, for example, using the same device, such as a phone, that was used to record the sound for the sound clip, or using any other device that may be able to playback the sound clip to the user and receive input from the user. The user may label the sound clip through a user interface that allows the user to input text to be used to label the sound clip. For example, if the user recorded a sound clip of their front doorbell, they may label the sound clip as "front doorbell" or "doorbell." The user may be able to place delimiters in the sound clip that they are labeling to indicate the start or the end of the sound being labeled, for example, when the recording was started some time before the sound or was stopped sometime after the sound.

Sound clips recorded automatically by devices in the environment may be presented to the user so that the user may label the sounds. The sound model that processed the recorded sound used to generate the sound clip may have determined that the sound was of the type the sound model was trained to detect, for example, exceeding the probability threshold used by the sound model operating in either normal or high-recall mode. The sound clip may be presented to the user on any suitable device that may be able to playback audio and receive input from the user. The sound clip may be presented along with any preliminary labels given to the sound clip by the sound models. If the sound clip was given only one preliminary label, the user may select whether the preliminary label accurately identifies the sound in the sound clip. If the sound clip was given multiple preliminary labels, the user may select the preliminary label that accurately identifies the sound in the sound clip. If none of the preliminary labels given to a sound clip accurately identify the sound in the sound clip, the user may enter a label for the sound clip or may indicate that the sound in the sound clip is unknown. If a sound clip was generated by the sound model for the interesting sound classifier, the sound clip may be presented to the user with no preliminary label or a placeholder preliminary label, and the user may enter a label for the sound clip or may indicate that the sound in the sound clip is unknown.

The number of automatically recorded sound clips presented to a user to be labeled may be controlled in any suitable manner. For example, sound clips may be randomly sampled for presentation to a user, or sound clips with certain preliminary labels may be presented to the user. Sound clips may also be selected for presentation to the user based on the probability determined by the sound model that gave the sound clip a preliminary label that the sound in the sound clip is the sound the sound model was trained to detect. For example, sound clips with probabilities within a specified range may be presented to the user. This may prevent the user from being presented with too many sound clips.

Sounds recorded automatically may also be labeled by one of the sound models running on the devices in the environment. When a sound model determines that there is a high probability that the sound in a sound clip is the sound the sound model was trained to detect, the preliminary label given to the sound clip by the sound model may be used as the label for the sound clip without requiring presentation to the user. For example, when a sound model for door opening determines that there is a 95% probability that a recorded sound is the sound of a door opening, the "door opening" preliminary label given to the sound clip for the recorded sound may be used as the label for the sound clip without input from the user. The sound clip with the sound that was determined to be a door opening with a 95% probability may not be presented to the user for labeling.

The labeled sound clips of sounds recorded in the environment may be used to further train the sound models in the environment in order to localize the sound models to the environment. The labeled sound clips may be used to create training data sets for the sound models. A training data set for a sound model may include positive examples and negative examples of the sound the sound model is trained to detect. Sound clips with labels that match the label of a sound model may be added to the training data set for that sound model as positive examples. For example, sound clips labeled as "doorbell" may be added to the training data set for the sound model for the doorbell as positive examples. Sound clips with labels that do not match the label of a sound model may be added to the training data set for that sound model as negative examples. For example, sound clips labeled as "cough" or "door opening" may be added to the training set for the sound model for the doorbell as negative examples. This may result in training data sets for sound models where the positive and negative examples are sounds that occur within the environment. For example, the sound clips in the positive examples for the sound model for the doorbell may be the sound of the doorbell in the environment, as compared to the positive examples used in the pre-training of the sound model, which may be the sounds of various doorbells, and sounds used as doorbell sounds, from many different environments but not from the environment the sound model operates in after being pre-trained and stored on a device. The same labeled sound clip may be used as both positive and negative examples in the training data sets for different sound models. For example, a sound clip labeled "doorbell" may be a positive example for the sound model for doorbells and a negative example for the sound model for coughs.

Augmentation of labeled sound clips may be used to increase the number of sound clips available for training data sets. For example, a single labeled sound clip may have room reverb, echo, background noises, or other augmentations applied through audio processing in order to generate additional sound clips with the same label. This may allow for a single labeled sound clip to serve as the basis for the generation of multiple additional labeled sound clips, each of which may serve as positive and negative examples in the same manner as the sound clip they were generated from.

The training data sets created for the sound models may be used to train the sound models. Each sound model may be trained with the training data set generated for it from the sound clips, for example, the training data set whose positive examples have labels that match the label of the sound model. The sound models may be trained using the training data sets in any suitable manner. For example, the sound models may be models for neural networks, which may be trained using, for example, backpropagation based on the errors made by the sound model when evaluating the sound clips that are positive and negative examples from the training data set of the sound the sound model is trained to detect. This may allow the sound models to be trained with sounds specific to the environment that the sound models are operating in, for example, training the sound model for the doorbell to detect the sound of the environment's specific doorbell, or training the sound model for coughs to detect the sound of the coughs of the environment's occupants. This may localize the sound models to the environment in which they are operating, further training the sound models beyond the pre-training on donated or synthesized data sets of sounds that may represent the sounds of various different environments. Pre-trained sound models that detect the same sound and are operating on devices in different environments may start off as identical, but may diverge as each is trained with positive examples of the sound from its separate environment, localizing each sound model to its environment.

Training of the sound models may occur on individual devices within the environment, and may also be distributed across the devices within the environment. The training may occur only on devices that are members of the environment-specific network, to prevent the labeled sound clips from being transmitted outside of the environment or stored on devices that will leave the environment and do not belong to non-guest occupants of the environment unless authorized by a non-guest occupant of the environment. Different devices in the environment that are members of the environment-specific network may have different available computing resources, including different levels of volatile and non-volatile memory and different general and special purpose processors. Some of the devices in the environment may be able to train sound models on their own. For example, a phone, tablet, laptop, or hub device may have sufficient computational resources to train sound models using the labeled sound clips in the training data sets without assistance from any other device in the environment. Such a device may also perform augmentation on label sound clips to generate additional sound clips for the training data sets.

Devices that do not have sufficient computational resources to train sound models on their own may participate in federated training of the sound models. In federated training, the training of a sound model may be divided into processing jobs which may require fewer computational resources to perform than the full training. The processing jobs may be distributed to devices that are members of the environment-specific network and do not have the computational resource to train the sound models on their own, including devices that do not have microphones or otherwise did not record sound used to generate the sound clips. These devices may perform the computation needed to complete any processing jobs they receive and return the results. A device may receive any number of processing jobs, either simultaneously or sequentially, depending on the computational resources available on that device. For example, devices with very small amounts of volatile and non-volatile memory may receive only one processing job at time. The training of a sound model may be divided into processing jobs by a device that is a member of the environment-specific network and does have the computation resources to train a sound model on its own, for example, a phone, tablet, laptop, or hub device. This device may manage the sending of processing jobs to the other devices in the environment-specific network, receive results returned by those devices, and use the results to train the sound models. The recorded sounds used for training may remain within the environment, preventing sensitive data from being transmitted outside of the environment during the training of the sound models. Each of the devices may run a federating training program built-in to, or on top of, their operating systems that may allow the devices to manage and participate in federated training. The federating training program may have multiple versions to allow it to be run on devices with different amounts and types of computing resources. For example, a client version of the federated training program may run on devices that have fewer computing resources and will be the recipients of processing jobs, while a server version of the federated training program may run on devices that have more computing resources and may generate and send out the processing jobs and receive the results of the processing jobs.

Sound models for sounds associated with people may be individualized in addition to being localized. Multiple sound models for sounds associated with a person, such as voice, cough, snore, or sneeze, may operate within an environment. For example, instead of having a single sound model for a person's cough, multiple sound models for coughs may operate within an environment. Each of the multiple sound models may start off the same, having been pre-trained to detect the same sound, for example, a cough, but may be trained to be specific to an individual occupant of the environment. When a user is asked to label a sound clip whose preliminary label is a sound associated with a person, for example, a "cough", the user may be asked to specify which person is responsible for the sound, for example, whose cough it is. This may result in the creation of separate training data sets for each person's version of a sound, such as their individual cough, each of which may be used to train a separate one of the sound models for that sound. For example, the training data set for a specific person's cough may use sound clips labeled as being that person's cough as positive examples and sound clips labeled as being other persons' coughs as negative examples. The sound models for a sound associated with a person may diverge as they are each trained to detect a specific person's version of the sound, for example, their cough, based on a training data set where that specific person's version of the sound is a positive example and other people's versions of the sound are negative examples.

Training of the sound models operating within the environment may be ongoing while the sound models are operating, and may occur at any suitable times and intervals. Automatic recording of sounds to generate sound clips may occur at any time, and sound clips may be presented to users for labeling at any suitable time. Labeled sound clips, whether labeled by users or automatically, may be used to generate and update training data sets as the labeled sound clips are generated, or at any suitable time or interval. Some sound models in the environment may not operate until they have undergone training to localize the sound model. For example, a sound model for a doorbell may have been trained on a wide variety of sounds, and may not be useful within an environment until the sound model has been trained using positive examples of the environment's doorbell.

The output of the localized sound models may be used in any suitable manner. For example, the sounds detected by the sound models may be used to determine data about the current state of the environment, such as, for example, the number, identity, and status of current occupants of the environment, including people and animals, and the operating status of various features of the environment, including doors and windows, appliances, fixtures, and plumbing. Individual sound models may detect individual sounds. Determinations made using sounds detected by the sound models may be used to control devices in the environment, including lights, sensors including passive infrared sensors used for motion detection, light sensors, cameras, microphones, entryway sensors, light switches, security devices, locks, A/V devices such as TVs, receivers, and speakers, devices for HVAC systems such as thermostats, motorized devices such as blinds, and other such controllable device.

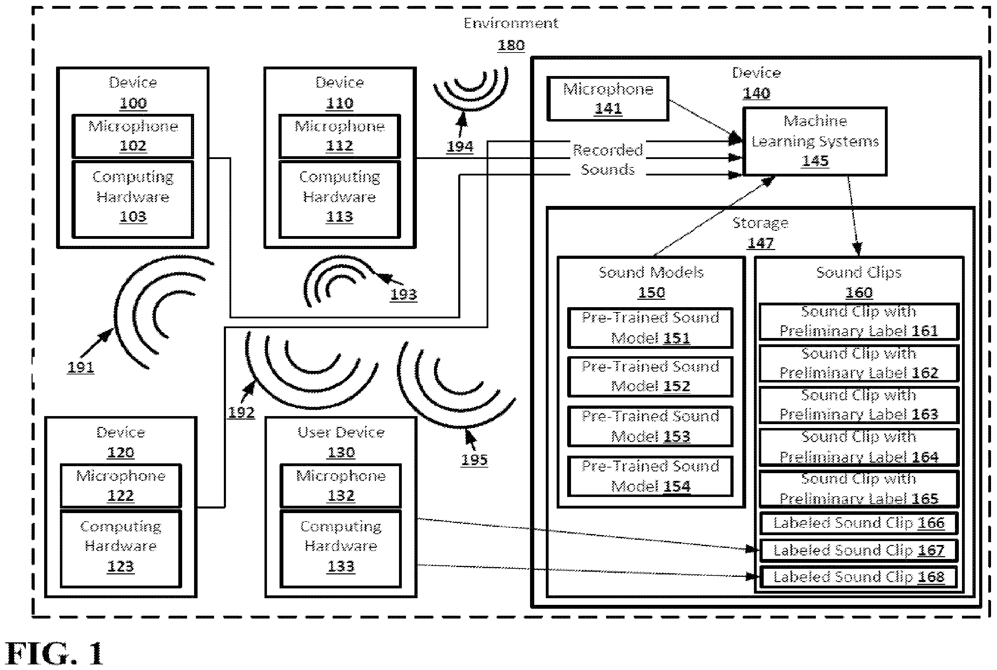

FIG. 1 shows an example system and arrangement suitable for sound model localization within an environment according to an implementation of the disclosed subject matter. An environment 180 may include devices 100, 110, 120, and 140, and user device 130. The environment 180 may be any suitable environment or structure, such as, for example, a house, office, apartment, or other building, or area with any suitable combination of indoor and outdoor spaces. The devices 100, 110, 120, and 140 may be any suitable devices that may be located in the environment 180 that may include microphones 102, 112, 122, and 141, such as sensor devices, camera devices, speaker devices, voice-controlled devices, and other A/V devices. For example, the device 100 may be a sensor device that may include the microphone 102 and a PIR sensor. The device 110 may be a camera device that may include the microphone 112 and a camera. The device 120 may be a small speaker device that may include the microphone 122 and a speaker. The device 140 may be a large speaker device that may include a microphone 141 and a speaker. The user device 130 may be a mobile computing device, such as a phone, that may include a display, speakers, a microphone, and computing hardware 133. The devices 100, 110, 120, 130, and 140 may be members of an environment-specific network for the environment 180.

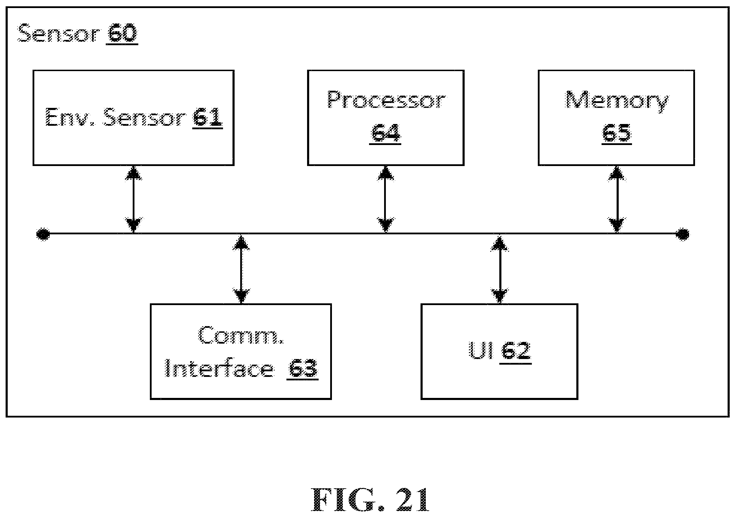

The devices 100, 110, and 120 may include computing hardware 103, 113, and 123, and the user device 130 may include the computing hardware 133. The computing hardware 103, 113, 123, and 133 may be any suitable hardware for general purpose computing, including processors, network communications devices, special purpose computing, including special purpose processors and field programmable gate arrays, and storages that may include volatile and non-volatile storage. The computing hardware 103, 113, 123, and 133 may vary across the devices 100, 110, 120, and 130, for example, including different processors and different amounts and types of volatile and non-volatile storage, and may run different operating systems. The computing hardware 103, 113, 123, and 133 may be any suitable computing device or system, such as, for example, a computer 20 as described in FIG. 21. The device 140 may include computing hardware with a storage 147, may include volatile and non-volatile storage and may, for example, include more memory than the devices 100, 110, and 120. The device 140 may include computing hardware that may be any suitable computing device or system, such as, for example, a computer 20 as described in FIG. 21.

Sounds 191, 192, 193, 194, and 195 may be any suitable sounds that may occur within the environment 180. For example, the sound 195 may be the sound of a doorbell, the sound 191 may be the sound of a person's cough, the sound 192 may be the sound of a sink running, the sound 193 may be ambient noise, and the sound 194 may be a sound made by a pet. The microphones 102, 112, 122, and 141 may automatically record sounds occurring in the environment 180 that reach them, as they may be left open. For example, the sound 191 may reach the microphones 102 and 122. The sound 192 may reach the microphones 122 and 132. The sound 193 may reach the microphone 112. The sound 194 may reach the microphones 112 and 141. The sound 195 may reach the microphone 132. The microphone 132 may be purposefully used, by a user of the user device 130, to record the sounds 192 and 195 that reach the microphone 132.

The sounds automatically recorded by the microphones 102, 112, and 122, may be sent to the device 140. The device 140 may include, in the storage 147, sound models 150, including pre-trained sound models 151, 152, 153, and 154 that may be operating in the environment 180. The pre-trained sound models 151, 152, 153, and 154 may be models for the detection of specific sounds that may be used in conjunction with a machine learning system, and may be, for example, weights and architectures for neural networks, or may be models for Bayesian networks, artificial neural networks, support vector machines, classifiers of any type, or any other suitable statistical or heuristic machine learning system types. Each of the pre-trained sound models 151, 152, 153, and 154 may have been pre-trained, for example, using donated or synthesized sound data for sounds that were recorded outside of the environment 180 to detect a different sound before being stored in the storage 147. For example, the pre-trained sound model 151 may detect coughs, the pre-trained sound model 152 may detect the sound of a doorbell, the pre-trained sound model 153 may detect the sound of a pet, and the pre-trained sound model 154 may detect the sound of a sink running.

The device 140 may process the sounds automatically recorded by the microphones 102, 112, 122, and 141 using the sound models 150 and machine learning systems 145. The machine learning systems 145 may be any suitable combination of hardware and software for implementing any suitable machine learning systems that may use the sound models 150 to detect specific sounds in recorded sounds. The machine learning systems 145 may include, for example, artificial neural networks such as deep learning neural networks, Bayesian networks, support vector machines, classifiers of any type, or any other suitable statistical or heuristic machine learning system types. The machine learning systems 145 may be implemented using any suitable type of learning, including, for example, supervised or unsupervised online learning or offline learning. The machine learning systems may process the recorded sounds from the microphones 102, 112, 122, and 141 using each of the pre-trained sound models 151, 152, 153, and 154. The output of the pre-trained sound models 151, 152, 153, and 154 may be, for example, probabilities that the recorded sounds are of the type the pre-trained sound models 151, 152, 153, and 154 were trained to detect.

The results of processing the sounds automatically recorded by the microphones 102, 112, 122, and 141 using the pre-trained sound models 151, 152, 153, and 154 may be used by the device 140 to generate and store sound clips with preliminary labels, such as the sound clips with preliminary labels 161, 162, 163, 164, and 165. A recorded sound may be stored as a sound clip and given a preliminary label when a sound model determines that the probability that the recorded sound includes the sound that sound model was trained to detect is greater than a threshold, which may be high, for example, in a normal operating mode for the sound model, or low, for example, in a high-recall operating mode for the sound model. For example, a recording of the sound 191 from the device 100 may be processed with the machine learning systems 145 using the pre-trained sound model 151 for detecting coughs operating in a high-recall mode with a probability threshold of 50%. The sound model 151 may output that the recording of the sound 191 has a 53% probability of including the sound of a cough. The recording of the sound 191 may be given a preliminary label of "cough" and stored as the sound clip with preliminary label 161. The same sound clip may be given more than one preliminary label. For example, if another of the sound models 150 determines that there is a probability greater than the threshold probability for that sound model that the recording of the sound 191 from the device 100 includes the sound the sound model was trained to detect, that sound model may also give the recording of the sound 191 a preliminary label which may be stored in the sound clip with preliminary label 161 The processing of the recorded sounds from the microphones 102, 112, 122, and 141 using the sound models 150 may result in the generation and storing of the sound clips with preliminary labels 162, 163, 164, and 165.

If a recorded sound processed using one of the sound models 150 operating in a normal mode or a high recall mode is determined to have a very high probability of including the sound that sound model was trained to detect, the label given to the sound clip generated from the recorded sound may not need to be a preliminary label. For example, the pre-trained sound model 154 may determine that there is a 95% probability that the recording of the sound 193 received from the device 100 includes the sound of running water from the sink. The sound clip generated from the recording of the sound 193 received from the device 100 may be given the label of "running sink" and may be stored as a labeled sound clip 166. The label of "running sink" may not be considered preliminary.

In some implementations, the various sound models 150 may be stored on different devices in the environment 180, including the user device 130, and the automatically recorded sounds may be sent to the different devices to be processed using the sound models 150.

A user may use the user device 130 and the microphone 132 to purposefully record sounds. When the user purposefully records a sound with user device 130, the user may provide the label for the recorded sound. This label may be stored with a sound clip of the recorded sound. For example, the user may use the user device 130 to record the sound 195, which may be the sound of the doorbell of a door of the environment 180. The user may provide the label "doorbell" to the recorded sound. The user may also trim the recorded sound to remove portions at the beginning or end of the recorded sound that do not include the sound of the doorbell. The user device 130 may use the recorded sound to generate a sound clip, and may send the sound clip and label of "doorbell" provided by the user to the device 140 to be stored with the sound clips 160 as labeled sound clip 167. Similarly, the user may use the user device 130 to purposefully record the sound 192 of a sink running and may provide the label "running sink", resulting in a labeled sound clip 168 being stored on the user device 140. The user may provide labels for recorded sounds in any suitable manner. For example, the user device 130 may display labels associated with the sound models 150 to the user so that the user may select a label for the recorded sound, or the user may enter text to provide the label for the recorded sound.

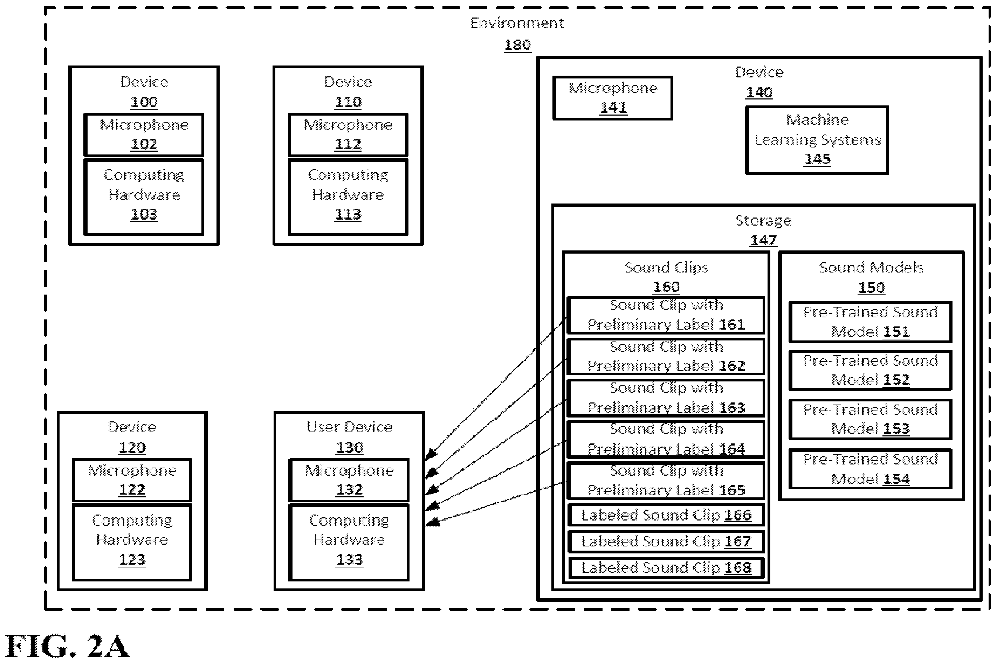

FIG. 2A shows an example system and arrangement suitable for sound model localization within an environment according to an implementation of the disclosed subject matter. The sound clips with preliminary labels 161, 162, 163, 164, and 165 may be sent to a user device to be labeled by a user. The device 140 may send the sound clips with preliminary labels 161, 162, 163, 164, and 165 to any device that is a member of the environment-specific network for the environment 180 that may include a speaker for playing back a sound clip to a user, a display for displaying the preliminary label to the user, and an input device to allow the user to select whether the preliminary label is correct and to input a correct label for the sound clip if the preliminary label is incorrect. For example, the sound clips with preliminary labels 161, 162, 163, 164, and 165 may be sent to the user device 130. The user may play back the sound clip with preliminary label 161, and may determine if the preliminary correctly identifies the sound in the sound clip. The sound clip with preliminary label 161 may include the sound of a person coughing. If the preliminary label for the sound clip with preliminary label 161 is "cough", the user may input to the user device 130 that the preliminary label is correct. If the preliminary label for the sound clip with preliminary label 161 is "sneeze", the user may input to the user device 130 that the preliminary label is incorrect. The user may then enter the correct preliminary label, for example, by entering "cough" as text or by selecting it from a list of labels that are the sounds the various sound models 150 were trained to detect. The user may play back and provide labels to any number of the sound clips with preliminary labels 161, 162, 163, 164, and 165. In some implementations, the device 140 may only send some of the sound clips with preliminary labels 161, 162, 163, 164, and 165 to be labeled by a user, for example, pruning out certain ones of the sound clips with preliminary labels 161, 162, 163, 164, and 165 based on any suitable criteria so as not to occupy too much of the user's time and attention. The sound clips with preliminary labels 161, 162, 163, 164, and 165 may only be sent from the device 140 to the user device 130 while the user device 130 is connected to the same LAN as the device 140, for example, a Wi-Fi LAN of the environment 180. This may prevent transmission of the sound clips with preliminary labels 161, 162, 163, 164, and 165 to any devices outside of the environment 180 as they may not be transmitted over the Internet and may not need to pass through server systems outside of the environment 180.

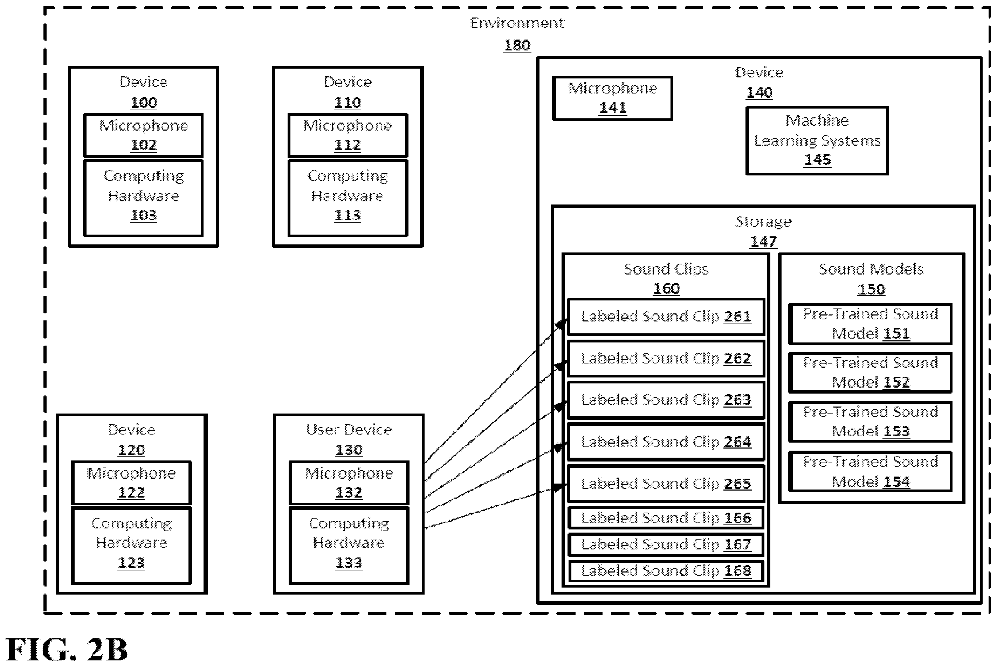

FIG. 2B shows an example system and arrangement suitable for sound model localization within an environment according to an implementation of the disclosed subject matter. The user device 130 may send the sound clips from the sound clips with preliminary labels 161, 162, 163, 164, and 165 to the device 140 along with the labels given to the sound clips by the user using the user device 130. The label for a sound clip may be the preliminary label if the user indicated that the preliminary label correctly identified the sound in the sound clip, or may be a label entered or selected by the user if the user indicated that the preliminary label did not correctly identify the sound in the sound clip. The sound clips and labels may be stored with the sound clips 160 as the labeled sound clips 261, 263, 262, 264, and 265.

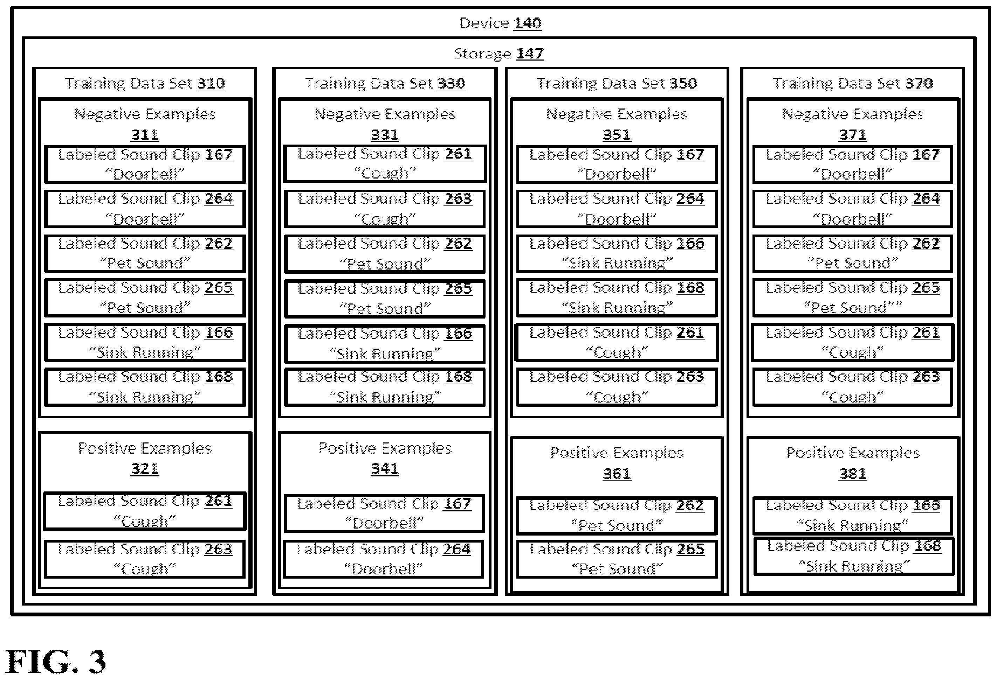

FIG. 3 shows an example system and arrangement suitable for sound model localization within an environment according to an implementation of the disclosed subject matter. The sound clips 160, after being labeled, may be used to generate training data sets that may be used to localize pre-trained sound models. For example, the labeled sound clips 166, 167, 168, 261, 262, 263, 264, and 265 may be used to generate training data sets 310, 330, 350, and 370, which may be intended to be used to further train, and localize, the pre-trained sound models 151, 152, 153, and 154. Labeled sound clips with labels that match the label of a sound model may be positive examples in the training data set for that sound model, while labeled sound clips with labels that don't match the label of a sound model may be negative examples in the training data set for that sound model.

The training data set 310 may be generated to train and localize the pre-trained sound model 151, which may have been pre-trained to detect the sound of a cough, and may be labeled "cough". The training data set 310 may include negative examples 311, which may be labeled sound clips whose label is something other than "cough", such as the labeled sound clips 167 and 264 with the label "doorbell", 262 and 265 with the label "pet sound", and 166 and 168 with the label "sink running." The training data set 310 may include positive examples 321, which may be labeled sound clips whose label is "cough", such as the labeled sound clips 261 and 263.

The training data set 330 may be generated to train and localize the pre-trained sound model 152, which may have been pre-trained to detect the sound of a doorbell, and may be labeled "doorbell". The training data set 330 may include negative examples 331, which may be labeled sound clips whose label is something other than "doorbell", such as the labeled sound clips 261 and 263 with the label "cough", 262 and 265 with the label "pet sound", and 166 and 168 with the label "sink running." The training data set 330 may include positive examples 341, which may be labeled sound clips whose label is "doorbell", such as the labeled sound clips 167 and 264.

The training data set 350 may be generated to train and localize the pre-trained sound model 153, which may have been pre-trained to detect the sound of a pet. The training data set 350 may include negative examples 351, which may be labeled sound clips whose label is something other than "pet sound", such as the labeled sound clips 167 and 264 with the label "doorbell", 261 and 263 with the label "cough", and 166 and 168 with the label "sink running." The training data set 350 may include positive examples 361, which may be labeled sound clips whose label is "pet sound", such as the labeled sound clips 262 and 265.

The training data set 370 may be generated to train and localize the pre-trained sound model 154, which may have been pre-trained to detect the sound of a sink running. The training data set 370 may include negative examples 371, which may be labeled sound clips whose label is something other than "sink running", such as the labeled sound clips 167 and 264 with the label "doorbell", 262 and 265 with the label "pet sound", and 261 and 263 with the label "cough." The training data set 371 may include positive examples 381, which may be labeled sound clips whose label is "sink running", such as the labeled sound clips 166 and 168.

The training data sets 310, 330, 350, and 370 may be generated on the device 140 and stored in the storage 170, or may be generated and stored on any of the devices that are members of the environment-specific network in the environment 180. Augmentations, such as the application reverb and background noise, may be applied to any of the labeled sound clips in order to generate additional labeled sound clips that may be used as positive and negative examples in the training data sets 310, 330, 350, and 370. The augmentations may be performed on the device 140, or on any other device that is a member of the environment-specific network for the environment 180.

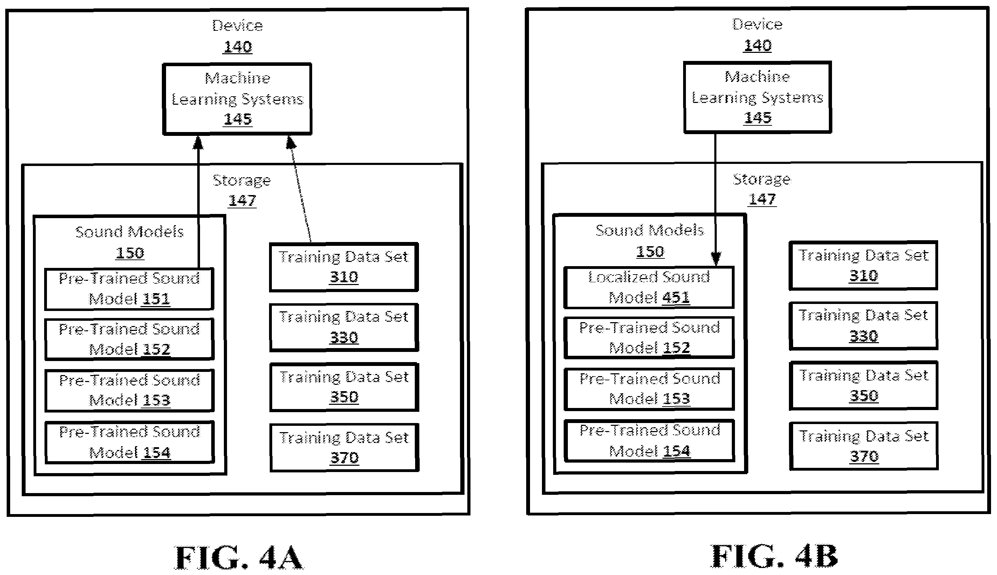

FIG. 4A shows an example system and arrangement suitable for sound model localization within an environment according to an implementation of the disclosed subject matter. The training data set 310 may be used by the machine learning systems 145 to further train, and localize, the pre-trained sound model 151. The training data set 310, including positive examples 321 and negative examples 261 may be used to train the pre-trained sound model 151 in any suitable manner based on the type of machine learning model used to implement the sound model. For example, if the pre-trained sound model 151 includes weights and architecture for a neural network, supervised training with backpropagation may be used to further train the pre-trained sound model 151 with the training data set 310.

FIG. 4B shows an example system and arrangement suitable for sound model localization within an environment according to an implementation of the disclosed subject matter. Through training the pre-trained sound model 151 with the training data set 310, the machine learning systems 145 may modify the pre-trained sound model 151, generating a localized sound model 451. The localized sound model 151 may be the result of the pre-trained sound model 151 for detecting coughs undergoing training with sound clips of coughs, and sound clips of sounds that are not coughs, recorded within the environment 180. This may result in the localized sound model 451 more accurately determining when a sound in the environment 180 is a cough, as the localized sound model 451 may better model the coughs that occur in the environment 180 than the pre-trained sound model 151, which was trained on coughs that did not occur in and were not recorded in the environment 180 and may differ from the coughs that do occur in the environment 180.

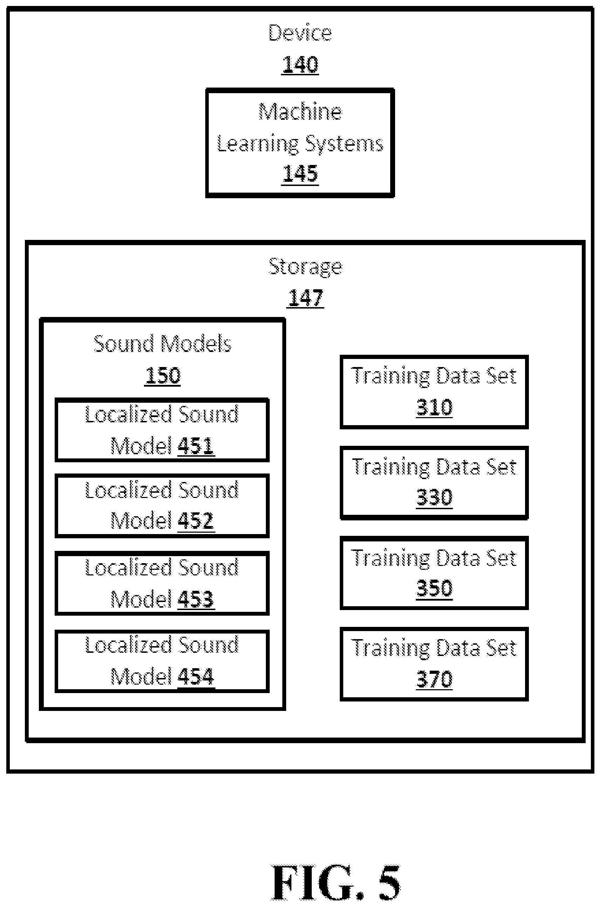

FIG. 5 shows an example system and arrangement suitable for sound model localization within an environment according to an implementation of the disclosed subject matter. The training data set 330 may be used by the machine learning systems 145 to further train, and localize, the pre-trained sound model 152, generating the localized sound model 452. The localized sound model 452 may be able to more accurately determine when a sound in the environment 180 is the sound of a doorbell of the environment 180, as the training data set 330 may include positive examples 321 that are labeled sound clips 167 and 264 of the doorbell of the environment 180. The pre-trained sound model 152 may have been trained using a variety of doorbell sounds which may or may not have included that specific sound of the doorbell of the environment 180, resulting in the pre-trained sound model 152 not being able to accurately determine when a sound in the environment 180 is the sound of the doorbell of the environment 180. The localized sound model 452 may be localized to the sound of the doorbell of the environment 180.

The training data set 350 may be used by the machine learning systems 145 to further train, and localize, the pre-trained sound model 153, generating the localized sound model 453. The localized sound model 452 may be able to more accurately determine when a sound in the environment 180 is the sound of a pet of the environment 180, as the training data set 330 may include positive examples 321 that are labeled sound clips 167 and 264 of a pet of the environment 180. The pre-trained sound model 152 may have been trained using a variety of pet sounds which may be from animals that are different from the pet of the environment 180, resulting in the pre-trained sound model 152 not being able to accurately determine when a sound in the environment 180 is the sound of a pet of the environment 180.

The training data set 370 may be used by the machine learning systems 145 to further train, and localize, the pre-trained sound model 154, generating the localized sound model 454. The localized sound model 452 may be able to more accurately determine when a sound in the environment 180 is the sound of a running sink of the environment 180, as the training data set 330 may include positive examples 321 that are labeled sound clips 167 and 264 of the running sink of the environment 180. The pre-trained sound model 152 may have been trained using a variety of running sink sounds which may be from sinks different from those of the environment 180, resulting in the pre-trained sound model 152 not being able to accurately determine when a sound in the environment 180 is the sound of the running sink of the environment 180.

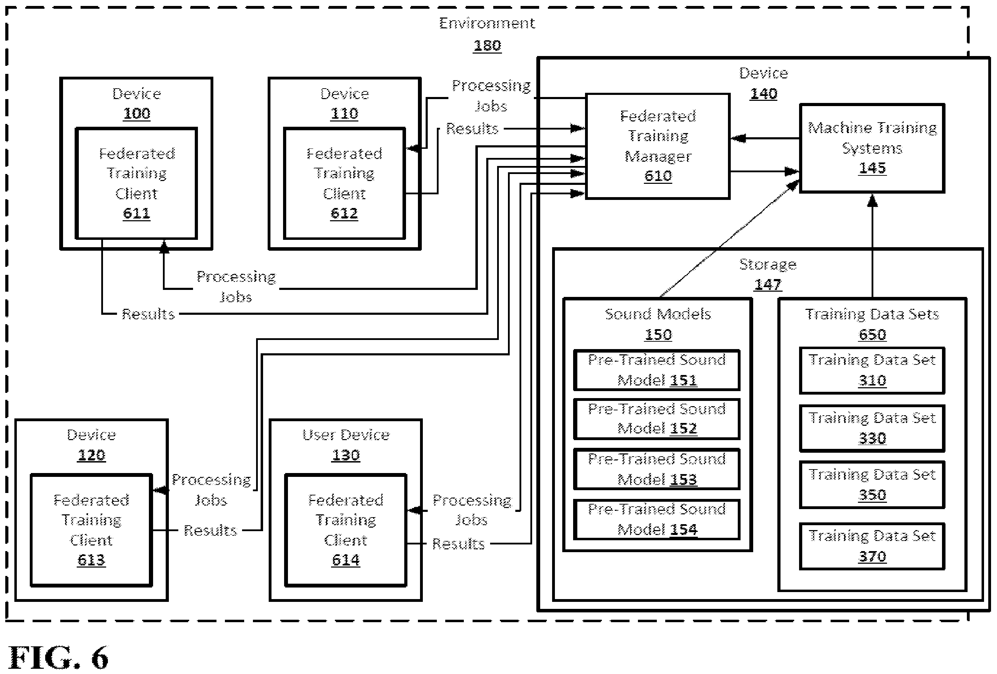

FIG. 6 shows an example system and arrangement suitable for sound model localization within an environment according to an implementation of the disclosed subject matter. Training of the sound models 150 using training data sets 650, including, for example, the training data sets 310, 330, 350, and 370, may use federated training. The device 140 may include a federated training manager 610. The federated training manager 610 may be any suitable combination of hardware and software, including an application running on or built-in to an operating system of the device 140, for managing various aspects of the training of the sound models 150. The federated training manager 610 may, for example, control the receiving and storage of the sounds clips with preliminary labels and labeled sound clips by the device 140, the sending by the device 140 of the sound clips with preliminary labels to the user device 130, the generation by the device 140 of the training data sets 310, 330, 350, and 370 from the labeled sound clips in the sound clips 160, and the training of the sound models 150 using the training data sets 310, 330, 350, and 370. The federating training manager 610 may operate in conjunction with the machine learning system 145 and may divide the operations performed in training the sound models 150 using the training data sets 650 into processing jobs.

The federating training manager 160 may distribute the processing jobs among the devices that are members of the environment-specific network for the environment 180, such as the devices 100, 110, 120, and 130. The devices 100, 110, 120, and 130 may include federated training clients 611, 612, 613, and 614. The federated training clients 611, 612, 613, and 614 may include any suitable combination of hardware and software, including versions of an application running on or built-in to an operating system of the devices 100, 110, 120, and 130. Each of the federated training clients 611, 612, 613, and 614 may have a different version of the application that may be designed to run on the computing hardware 103, 113, 123, and 133, respectively, based on, for example, on the computation resources available. The federated training clients 611, 612, 613, and 614 may communicate with the federated training manager 610, receiving processing jobs sent by the federated training manager 610, performing the necessary operation to complete the processing jobs using the computing hardware 103, 113, 123, and 133, and sending the results of the processing jobs back to the federated training manager 610. This may allow for computations used to train the sound models 150 to be distributed across devices in the environment 180 that may not have the computational resources to fully perform the training on their own. For example, a processing job may include operations for determining the value for a single cell of a hidden layer of one of the sound models 150, rather than determining all values for all layers, including hidden and output layers, allowing the processing job to be performed on a device with fewer computational resources than would be needed to perform all of the operations for all of the layers of a one of the sound models 150. The processing jobs may be performed in parallel by the devices 100, 110, 120, and 130. Processing jobs may be sent in a serial manner to individual devices, so that, for example, when the device 100 returns results from a first processing job to the federating training manager 610, the federating training manager 610 may send a second processing job to the device 100.

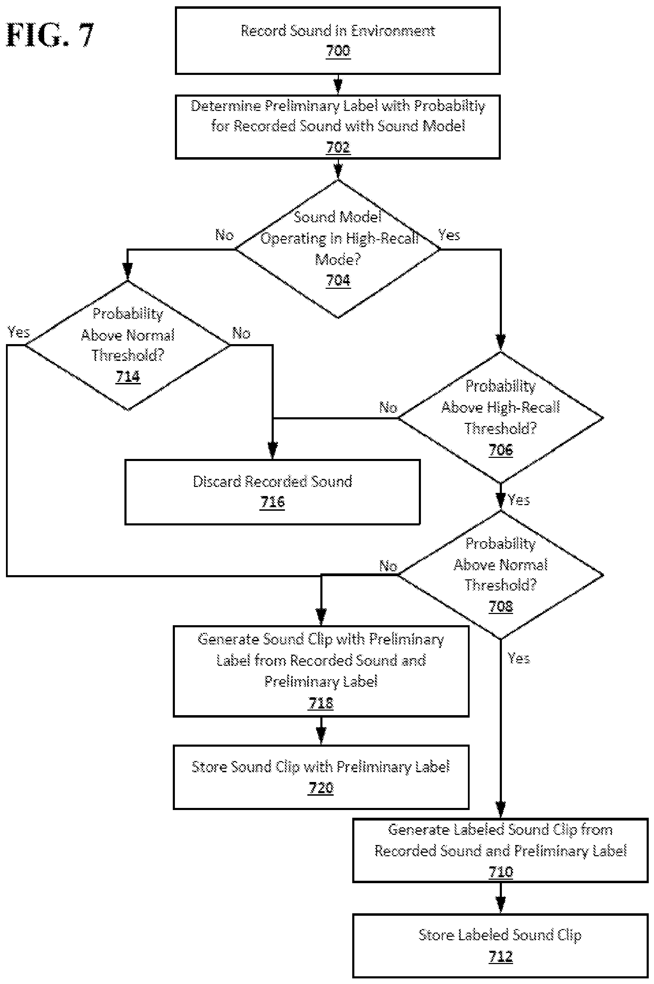

FIG. 7 shows an example of a process suitable for sound model localization within an environment according to an implementation of the disclosed subject matter.

At 700, a sound may be recorded in an environment.

At 702, a preliminary label with a probability may be determined for the recorded sound with a sound model.

At 704, if the sound model is operating in high-recall mode, flow may proceed to 706. Otherwise, flow may proceed to 714.

At 706, if the probability is above the high-recall threshold, flow may proceed to 708. Otherwise, flow may proceed to 716.

At 708, if the probability is above the normal threshold, flow may proceed to 710. Otherwise, flow may proceed to 718.

At 710, a labeled sound clip may be generated from the recorded sound and the preliminary label.

At 712, the labeled sound clip may be stored.

At 714, if the probability is above the normal threshold, flow may proceed to 718. Otherwise, flow may proceed to 716.

At 716, the recorded sound may be discarded.

At 718, a sound clip with a preliminary label may be generated from the recorded sound and the preliminary label.

At 720, the sound clip with the preliminary label may be stored.

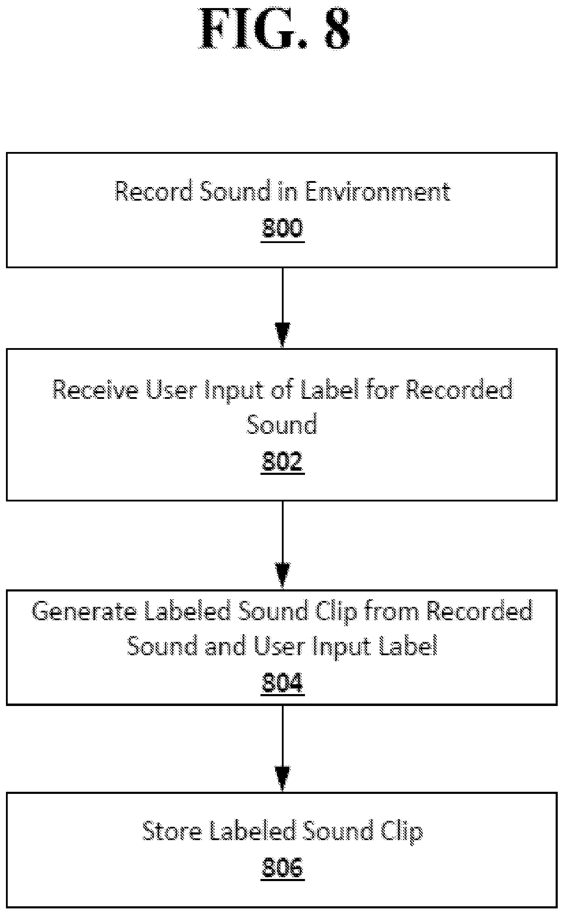

FIG. 8 shows an example of a process suitable for sound model localization within an environment according to an implementation of the disclosed subject matter.

At 800, a sound may be recorded in an environment.

At 802, user input of a label for the recorded sound may be received.

At 804, a labeled sound clip may be generated from the recorded sound and the user input label.

At 806, the labeled sound clip may be stored.

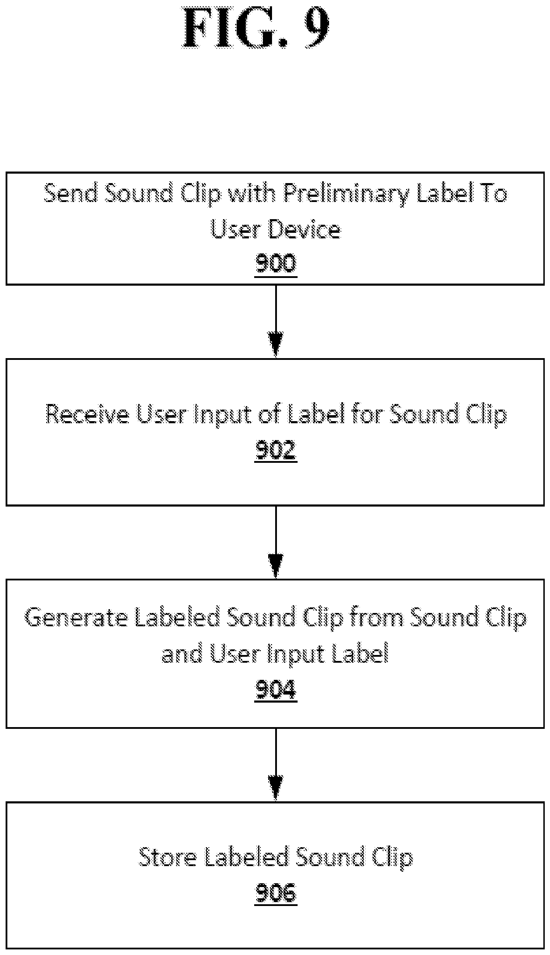

FIG. 9 shows an example of a process suitable for sound model localization within an environment according to an implementation of the disclosed subject matter.

At 900, a sound clip with a preliminary label may be sent to a user device.

At 902, user input of a label for the sound clip may be received.

At 904, a labeled sound clip may be generated from the sound clip and the user input label.

At 906, the labeled sound clip may be stored.

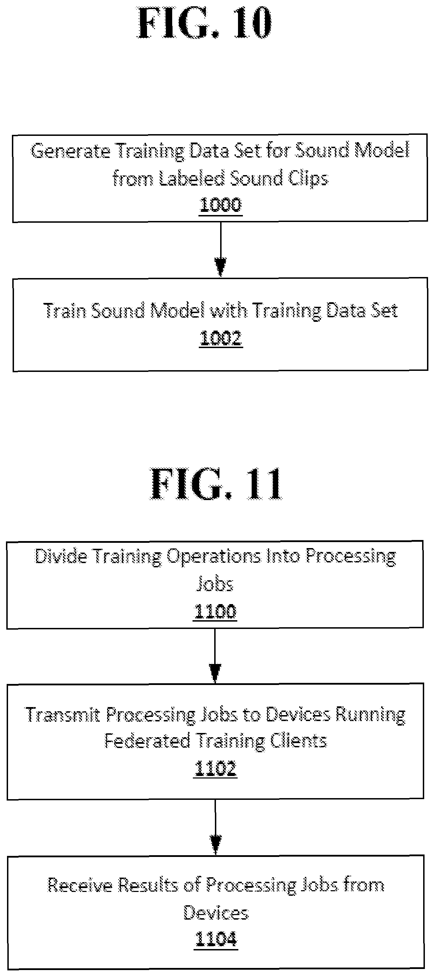

FIG. 10 shows an example of a process suitable for sound model localization within an environment according to an implementation of the disclosed subject matter.

At 1000, a training data set for a sound model may be generated from labeled sound clips.

At 1002, the sound model may be trained with the training data set.

FIG. 11 shows an example of a process suitable for sound model localization within an environment according to an implementation of the disclosed subject matter.

At 1100, a training operations may be divided into processing jobs.

At 1102, the processing jobs may be transmitted to devices running federated training clients.

At 1104, the results of the processing jobs may be received from the devices.

A computing device in an environment may receive, from devices in the environment, sound recordings made of sounds in the environment. The computing device may determine preliminary labels for the sound recordings using pre-trained sound models, wherein each of the preliminary labels has an associated probability. The computing device may generate sound clips with preliminary labels based on the sound recordings that have determined preliminary labels whose associated probability is over a high-recall threshold for the one of the pre-trained sound models that determined the preliminary label. The computing device may send the sound clips with preliminary labels to a user device. The computing device may receive labeled sound clips from the user device, wherein the labeled sound clips are based on the sound clips with preliminary labels. The computing device may generate training data sets for the pre-trained sound models using the labeled sound clips. The pre-trained sound models may be trained using the training data sets to generate localized sound models.

Additional labeled sound clips may be received from the user device based on sounds recorded in the environment using the user device, wherein the additional labeled sound clips are used in the generating of the training data sets.

Before sending the sound clips with preliminary labels to the user device, additional labeled sound clips may be generated based on the sound recordings that have determined preliminary labels whose associated probability is over a normal threshold for the one of the pre-trained sound models that determined the preliminary label, wherein the additional labeled sound clips are used in the generating of the training data sets.

The computing device may generate the training data sets for the pre-trained sound models using the labeled sound clips by adding labeled sound clips with labels that match a label of one of the pre-trained sound models to a training data set for the one of the pre-trained sound models as positive examples and adding labeled sound clips with labels that don't match the label of the one of the pre-trained sound models to the training data set for the one of the pre-trained sound models as negative examples.

The sound recordings made in the environment may be automatically recorded by ones of the devices in the environment that have microphones.

The computing device and devices may be members of an environment-specific network for the environment, and wherein the sound recordings, the sound clips with preliminary labels, labeled sound clips, and training data sets are only stored on devices that are members of the environment-specific network for the environment.

Training the pre-trained sound models using the training data sets to generate localized sound models may include dividing operations for training the pre-trained sound models into processing jobs, sending the processing jobs to the devices in the environment, and receiving results of the processing jobs from the devices in the environment.

A federated training manager may run on the computing device and perform the dividing of the operations for training the pre-trained sound models into processing jobs, the sending of the processing jobs to the devices in the environment, and the receiving of the results of the processing jobs from the devices in the environment, and versions of a federated training client may run on the devices in the environment and receive the processing jobs and send the results of the processing jobs to the federated training manager on the computing device.

Additional labeled sound clips may be generated by performing augmentations on the labeled sound clips.

A system may include a computing device in an environment that may receive, from devices in the environment, sound recordings made of sounds in the environment, determine preliminary labels for the sound recordings using pre-trained sound models, wherein each of the preliminary labels has an associated probability, generate sound clips with preliminary labels based on the sound recordings that have determined preliminary labels whose associated probability is over a high-recall threshold for the one of the pre-trained sound models that determined the preliminary label, send the sound clips with preliminary labels to a user device, receive labeled sound clips from the user device, wherein the labeled sound clips are based on the sound clips with preliminary labels, generate, by the computing device, training data sets for the pre-trained sound models using the labeled sound clips, and train the pre-trained sound models using the training data sets to generate localized sound models.

The computing device further may receive, from the user device, additional labeled sound clips based on sounds recorded in the environment using the user device, wherein the additional labeled sound clips are used to generate the training data sets.

The computing device may, before sending the sound clips with preliminary labels to the user device, generate additional labeled sound clips based on the sound recordings that have determined preliminary labels whose associated probability is over a normal threshold for the one of the pre-trained sound models that determined the preliminary label, wherein the additional labeled sound clips are used in the generating of the training data sets.

The computing device may generate training data sets for the pre-trained sound models using the labeled sound clips by adding labeled sound clips with labels that match a label of one of the pre-trained sound models to a training data set for the one of the pre-trained sound models as positive examples and add labeled sound clips with labels that don't match the label of the one of the pre-trained sound models to the training data set for the one of the pre-trained sound models as negative examples.

The computing device and devices are members of an environment-specific network for the environment, and wherein the sound recordings, the sound clips with preliminary labels, labeled sound clips, and training data sets are only stored on devices that are members of the environment-specific network for the environment.

The computing device may train the pre-trained sound models using the training data sets to generate localized sound models by dividing operations for training the pre-trained sound models into processing jobs, sending the processing jobs to the devices in the environment; and receiving results of the processing jobs from the devices in the environment.

The computing device may generate additional labeled sound clips by performing augmentations on the labeled sound clips.

According to an embodiment of the disclosed subject matter, a means for receiving, on a computing device in an environment, from devices in the environment, sound recordings made of sounds in the environment, a means for determining, by the computing device, preliminary labels for the sound recordings using pre-trained sound models, wherein each of the preliminary labels has an associated probability, a means for generating, by the computing device, sound clips with preliminary labels based on the sound recordings that have determined preliminary labels whose associated probability is over a high-recall threshold for the one of the pre-trained sound models that determined the preliminary label, a means for sending, by the computing device, the sound clips with preliminary labels to a user device, a means for receiving, by the computing device, labeled sound clips from the user device, wherein the labeled sound clips are based on the sound clips with preliminary labels, a means for generating, by the computing device, training data sets for the pre-trained sound models using the labeled sound clips, a means for training the pre-trained sound models using the training data sets to generate localized sound models, a means for receiving, from the user device, additional labeled sound clips based on sounds recorded in the environment using the user device, wherein the additional labeled sound clips are used in the generating of the training data sets, a means for adding labeled sound clips with labels that match a label of one of the pre-trained sound models to a training data set for the one of the pre-trained sound models as positive examples, a means for adding labeled sound clips with labels that don't match the label of the one of the pre-trained sound models to the training data set for the one of the pre-trained sound models as negative examples, a means for dividing operations for training the pre-trained sound models into processing jobs, a means for sending the processing jobs to the devices in the environment, a means for receiving results of the processing jobs from the devices in the environment, and a means for generating additional labeled sound clips by performing augmentations on the labeled sound clips, are included.

According to some embodiments of the disclosed subject matter, privacy-sensitive mechanisms for personalized sound discovery within an environment can be provided. For example, sound models that include pre-trained sound models can be trained to classify sound events in one or more desired classes using available datasets. The output from these pre-trained sound models can be used to personalize the detected sound event based on user feedback and/or user preferences from a user of a user device. This can, for example, detect prescribed sound classes (e.g., a beep class) in a home environment and enable a user of a user device to selectively personalize sounds in that sound class (e.g., a certain microwave beep that is detected within the home environment) without a connection to a remote system, a central server, or a cloud-computing system. In continuing this example, a device executing the personalized sound discovery mechanisms described herein can use the user feedback and/or user preferences to further refine an existing sound model for use in detecting sound events within the home environment, where the refined sound model can improve the detection of a certain personalized sound or can improve the accuracy of the sound model by reducing the number of detected false positives.

Referring back to FIG. 1, FIG. 1 shows an example system and arrangement suitable for personalized sound discovery within an environment according to an implementation of the disclosed subject matter. An environment 180 may include devices 100, 110, 120, and 140, and user device 130. The environment 180 may be any suitable environment or structure, such as, for example, a house, office, apartment, or other building, or area with any suitable combination of indoor and outdoor spaces. The devices 100, 110, 120, and 140 may be any suitable devices that may be located in the environment 180 that may include microphones 102, 112, 122, and 141, such as sensor devices, camera devices, speaker devices, voice-controlled devices, and other A/V devices. For example, the device 100 may be a sensor device that may include the microphone 102 and a PIR sensor. The device 110 may be a camera device that may include the microphone 112 and a camera. The device 120 may be a small speaker device that may include the microphone 122 and a speaker. The device 140 may be a large speaker device that may include a microphone 141 and a speaker. The user device 130 may be a mobile computing device, such as a phone, that may include a display, speakers, a microphone, and computing hardware 133. The devices 100, 110, 120, 130, and 140 may be members of an environment-specific network for the environment 180.

The devices 100, 110, and 120 may include computing hardware 103, 113, and 123, and the user device 130 may include the computing hardware 133. The computing hardware 103, 113, 123, and 133 may be any suitable hardware for general purpose computing, including processors, network communications devices, special purpose computing, including special purpose processors and field programmable gate arrays, and storages that may include volatile and non-volatile storage. The computing hardware 103, 113, 123, and 133 may vary across the devices 100, 110, 120, and 130, for example, including different processors and different amounts and types of volatile and non-volatile storage, and may run different operating systems. The computing hardware 103, 113, 123, and 133 may be any suitable computing device or system, such as, for example, a computer 20 as described in FIG. 21. The device 140 may include computing hardware with a storage 147, may include volatile and non-volatile storage and may, for example, include more memory than the devices 100, 110, and 120. The device 140 may include computing hardware that may be any suitable computing device or system, such as, for example, a computer 20 as described in FIG. 21.

Sounds 191, 192, 193, 194, and 195 may be any suitable sounds that may occur within the environment 180. For example, the sound 195 may be the sound of a doorbell, the sound 191 may be the sound of a person's cough, the sound 192 may be the sound of a sink running, the sound 193 may be ambient noise, and the sound 194 may be a sound made by a pet. The microphones 102, 112, 122, and 141 may automatically record sounds occurring in the environment 180 that reach them, as they may be left open. For example, the sound 191 may reach the microphones 102 and 122. The sound 192 may reach the microphones 122 and 132. The sound 193 may reach the microphone 112. The sound 194 may reach the microphones 112 and 141. The sound 195 may reach the microphone 132.

In some embodiments, the microphone 132 may be purposefully used, by a user of the user device 130, to record the sounds 192 and 195 that reach the microphone 132. For example, a user of the user device 130 can activate the microphone 132 to purposefully record a sound clip of a sound occurring with an environment of the user device 130 (e.g., a sound recording of a particular doorbell sound). In continuing this example, when the user purposefully records a sound with the user device 130, the user may provide a label for the recorded sound. This label may be stored with a sound clip or an embedding of the recorded sound. For example, the user may use the user device 130 to record the sound 195, which may be the sound of the doorbell of a door of the environment 180. The user may provide the label "doorbell" to the recorded sound. The user may also trim the recorded sound to remove portions at the beginning or end of the recorded sound that do not include the sound of the doorbell. The user device 130 may use the recorded sound to generate a sound clip, and may send the sound clip and label of "doorbell" provided by the user to the device 140 to be stored with the sound clips 160 as labeled sound clip 167.

The user may provide labels for recorded sounds in any suitable manner. For example, the user device 130 may display labels associated with the sound models 150 to the user so that the user may select a label for the recorded sound, or the user may enter text to provide the label for the recorded sound.

It should be noted that, in some embodiments, a user can affirmatively provide consent for the recording of sounds occurring in the environment of a device having a microphone. For example, in some embodiments, a user can provide consent to store sounds occurring in the environment of a device in which the device determines that the sound is not ambient noise and/or is otherwise deemed an interesting sound (e.g., using an interesting sound classifier). In another example, in some embodiments, a user can provide consent to store sounds occurring in the environment of a device in which the device determines that the sound may belong to a desired class of sounds (e.g., security sounds).

The sounds automatically recorded by the microphones 102, 112, and 122 may be sent to the device 140. The device 140 may include, in the storage 147, sound models 150, including pre-trained sound models 151, 152, 153, and 154 that may be operating in the environment 180. The pre-trained sound models 151, 152, 153, and 154 may be models for the detection of specific sounds that may be used in conjunction with a machine learning system, and may be, for example, weights and architectures for neural networks, or may be models for Bayesian networks, artificial neural networks, support vector machines, classifiers of any type, or any other suitable statistical or heuristic machine learning system types. Each of the pre-trained sound models 151, 152, 153, and 154 is pre-trained, for example, using donated or synthesized sound data for sounds that were recorded outside of the environment 180 to detect a different sound before being stored in the storage 147. For example, the pre-trained sound model 151 may detect coughs, the pre-trained sound model 152 may detect the sound of a doorbell, the pre-trained sound model 153 may detect the sound of a pet, and the pre-trained sound model 154 may detect the sound of a sink running.

The device 140 is configured to process the sounds automatically recorded by the microphones 102, 112, 122, and 141 using the sound models 150 and machine learning systems 145. The machine learning systems 145 may be any suitable combination of hardware and software for implementing any suitable machine learning systems that may use the sound models 150 to detect specific sounds in recorded sounds. The machine learning systems 145 may include, for example, artificial neural networks such as deep learning neural networks, Bayesian networks, support vector machines, classifiers of any type, or any other suitable statistical or heuristic machine learning system types. The machine learning systems 145 may be implemented using any suitable type of learning, including, for example, supervised or unsupervised online learning or offline learning. The machine learning systems are configured to process the recorded sounds from the microphones 102, 112, 122, and 141 using each of the pre-trained sound models 151, 152, 153, and 154. The output of the pre-trained sound models 151, 152, 153, and 154 may be, for example, probabilities that the recorded sounds are of the type or class the pre-trained sound models 151, 152, 153, and 154 were trained to detect.

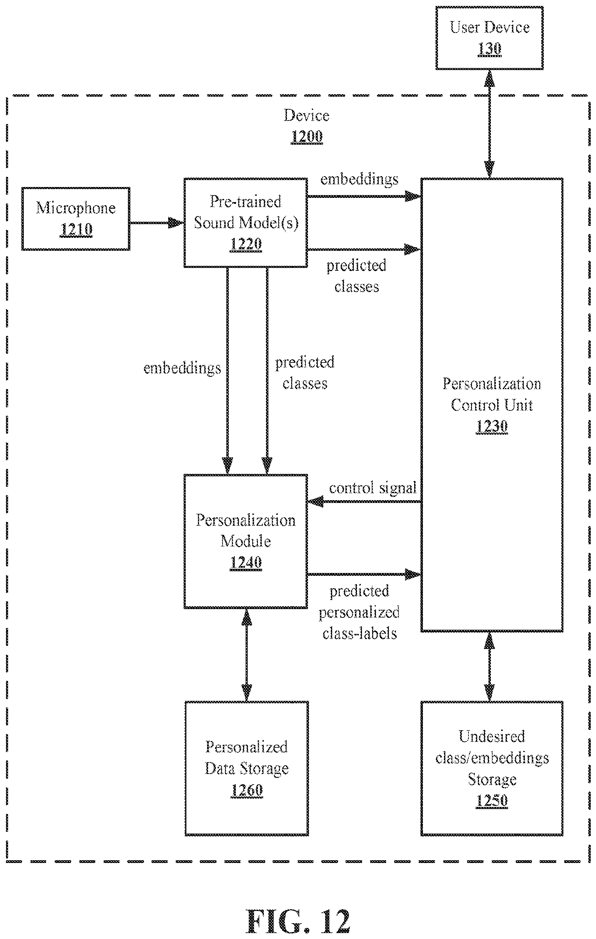

In a more particular embodiment, as shown in FIG. 12, a device 1200 that includes a microphone 1210 can include one or more pre-trained sound models 1220 used to classify a sound event from the microphone 1210 into one or more prescribed classes of sounds and to generate an embedding for the sound event. These outputs of the predicted class that the sound event may likely belong and the corresponding embedding of the sound event are used by a personalization module 1240 that personalizes desired sound events for one or more users in an environment based on user feedback.

For example, each of the one or more pre-trained sound models 1220 can determine a probability that a sound event from the microphone 1210 belongs in a class of sounds that the pre-trained sound model was trained to detect (e.g., doorbell sounds, dog barking sounds, etc.). In continuing this example, the one or more pre-trained sound models 1220 can output a predicted class label or predicted class labels based on the determined probabilities.

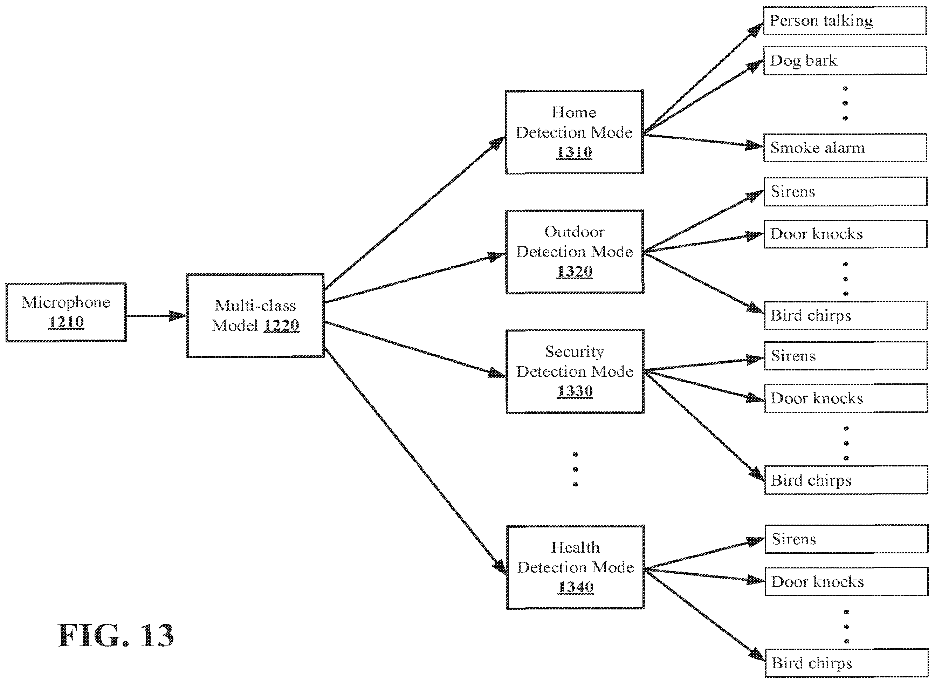

In some embodiments, additionally or alternatively to the one or more pre-trained sound models 1220 being configured to classify a sound event from the microphone 1210 into one or more prescribed classes of sounds, the one or more pre-trained sound models 1220 can be configured to allow a user of a user device to select one or more detection modes that correspond to user preferences or user requirements, where each of the detection modes can be associated with one or more sound classes. For example, as shown in FIG. 13, the pre-trained model 1220 can be associated with an indoor or a home detection mode 1310, an outdoor detection mode 1320, a security detection mode 1330, and a health detection mode 1340. As also shown in FIG. 13, each detection mode can be associated with one or more sound classes. For example, the home detection mode 1310 can be associated with a sound class of person talking sounds, a sound class of dog bark sounds, and a sound class of smoke alarm sounds; the outdoor detection mode 1320 can be associated with a sound class of siren sounds, a sound class of door knock sounds, and a sound class of bird chirp sounds; the security detection mode 1330 can be associated with a sound class of siren sounds, a sound class of door knock sounds, and a sound class of bird chirp sounds. In continuing this example, the selection of detection modes can allow the user of the user device to select which sound models to transmit to a particular device, such as sound models that detect "outdoor" sound classes to devices that are positioned outside of a home environment (e.g., a security camera on a porch), sound models that detect a "door knocking" sound class to a doorbell camera device that is positioned proximal to the front door of a home environment, etc.

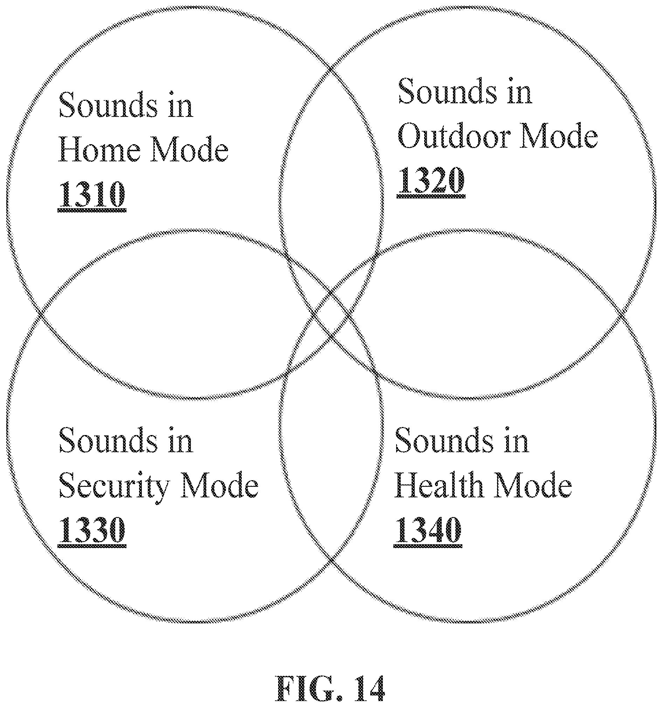

As shown in the diagram of sound classes for the various detection modes in FIG. 14, the sound classes within each detection mode can overlap with one another. For example, the outdoor detection mode 1320, the security detection mode 1330, and the health detection mode 1340 can each include the sound class of sirens as such sounds in this sound class can be applicable to a detection mode of outdoor sounds and a detection mode of health-related sounds. It should be noted that, in some embodiments, the sound class of sirens in the health detection mode 1340 can be different than the sound class of sirens in the outdoor detection mode 1320 (e.g., medical device alerts and home security alarm sounds in the sound class of sirens in the security detection mode 1340 and fire engine siren sounds in the sound class of sirens in the outdoor detection mode 1320).

Referring back to FIG. 12, in addition to determining a predicted class or predicted classes of sounds (e.g., that a sound event belongs to a beep class), the one or more pre-trained sound models 1220 are configured to determine an embedding for the sound event. For example, the results of processing the sounds automatically recorded by the microphones, such as microphone 1210, using the one or more pre-trained sound models 1220 is used by the device 1200 to generate and store a representation of the sound event with predicted labels, such as a representation of the sound event with the determined embedding and a predicted class that the sound event may belong to.

It should be noted that the embedding for the sound event can be any suitable representation of the recorded sound. For example, the one or more pre-trained sound models 1220 can be a machine learning model that accepts, as input, a sequence of features of audio data of any length and that can be utilized to generate, as output based on the input, a respective embedding. In continuing this example, the processing of the recorded sounds from the microphone 1210 results in the generation and storing of an embedding of the sound event along with a predicted class label, for example when a pre-trained sound model determines that the probability that the recorded sound includes the sound that the sound model was trained to detect is greater than a threshold value. Additionally or alternatively, a recorded sound may be stored as a sound clip and given a predicted class label when a pre-trained sound model determines that the probability that the recorded sound includes the sound that the sound model was trained to detect is greater than a threshold value.

It should be noted that, although FIG. 12 shows the one or more pre-trained sound models 1220 being stored within the device 1200, this is merely illustrative and the one or more pre-trained sound models 1220 may be stored on different devices in the environment, including the user device 130, and the automatically recorded sounds may be sent to the different devices to be processed using the one or more pre-trained sound models 1220.

According to the invention, the device 1200 includes a personalization module 1240 that personalizes desired sound events for one or more users in an environment and a personalization control unit 1230 that can interact with a user of the user device 130 (e.g., for user feedback and/or user preferences for personalized sound discovery), the one or more pre-trained sound models 1220, and the personalization module 1240.

As shown in FIG. 12, the personalization module 1240 is used to personalize the detection of a sound event based on user preferences. For example, the one or more pre-trained sound models 1220 provide the embedding for the sound event and the predicted class that the sound event may belong to the personalized control unit 1230, which, in turn, transmits a personalized sound discovery notification to a user of the user device 130. This personalized sound discovery notification can be, for example, a pop-up notification, an application notification, an email message, a short message service (SMS) message, a multimedia messaging service (MMS) message, an unstructured supplementary service data (USSD) message, or any other suitable message to an electronic device that informs the user of the sound event and prompts the user to indicate whether to personalize the sound event.

It should be noted that, in some embodiments, prior to transmitting the personalized sound discovery notification to the user of the user device 130, the personalization control unit 1230 can use the one or more pre-trained sound models 1220 to determine whether the sound event corresponds with an interesting sound. For example, a sound event can be determined to be an interesting sound in response to determining that the sound event corresponds to a particular class (e.g., a beep class, a door knock class, etc.). In another example, a sound event can be determined to be an interesting sound in response to a detection by one of the pre-trained sound models 1220. In continuing this example, a sound event can be determined to be an interesting sound such that it is surfaced to a user of the user device 130 in response to determining that the sound event has a particular probability of likely belonging to a particular class that is relevant to an environment of the user (e.g., a household environment).

It should also be noted that, in some embodiments, prior to transmitting the personalized sound discovery notification to the user of the user device 130, the personalization control unit 1230 can determine a confidence level associated with the accuracy of the sound class predicted by the one or more pre-trained sound models 1220. For example, in response to determining that the one or more pre-trained sound models 1220 has indicated that the detected sound is likely in the "doorbell" class but has a low confidence level associated with the prediction (e.g., as the doorbell sound has different features that the doorbell sounds that the sound model was trained), the personalization control unit 1230 can determine that the user of the user device should be prompted regarding such detected sounds. In continuing this example, in response to determining that the one or more pre-trained sound models 1220 has indicated that the detected sound is likely in the "doorbell" class and has a high confidence level associated with the prediction (e.g., as the doorbell sound is similar to the doorbell sounds that the sound model was trained), the personalization control unit 1230 can determine that the user of the user device should be prompted regarding such detected sounds based on the number of times that the user of the user device was previously notified of such sounds.

In some embodiments, in response to receiving feedback or any other suitable indication from the user of the user device 130 to personalize the detection of sound events (e.g., a user selection of a message that informs the user of the detected sound event), the personalization control unit 1230 can transmit a corresponding control signal to the personalization module 1240.

In some embodiments, device 1200 can select from different types of personalization modules for personalizing detected sound events.

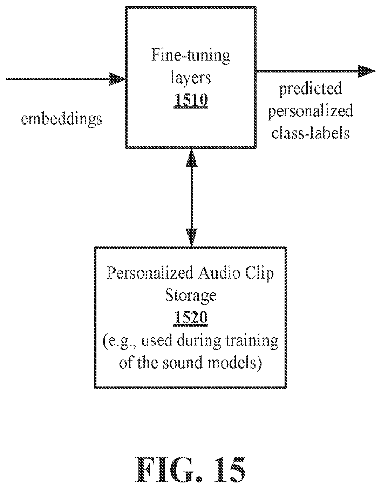

According to the invention, device 1200 uses a personalization module that includes fine-tuning layers for fine-tuning the one or more pre-trained sound models. For example, as shown in FIG. 15, device 1200 uses the personalization module 1240 that includes fine-tuning layers 1510, where the fine-tuning layers 1510 can be added after the one or more pre-trained sound models 1220 and where the fine-tuning layers 1510 are fine-tuned on-device for personalizing the sounds detected by the one or more pre-trained sound models 1220. In a more particular example, as shown in FIG. 15, the fine-tuning layers 1510 can be added after the portion where the embedding is extracted from the one or more pre-trained sound models 1220, where the fine-tuning layers 1510 of the personalization module 1240 are used to fine-tune the personalization module 1240 using stored sound clips that have been selected by the user of the user device 130 for personalization. Once fine-tuned, the personalization module 1240 can then be used for generating personalized class-labels of sound events. For example, the fine-tuned personalization module 1240 can be used to personalize a particular sound event within a sound class (e.g., identifying a microwave beep from other beeps that fall in the beep class), to remove false positives for a particular sound class (e.g., preventing a microwave beep from triggering a smoke alarm sound class), and/or to add a sound event to an existing class or a new class (e.g., ensuring that an out-of-spec smoke alarm or doorbell that was not previously detected by the one or more pre-trained sound models 1220 can be added to the smoke alarm sound class or the doorbell sound class, respectively).

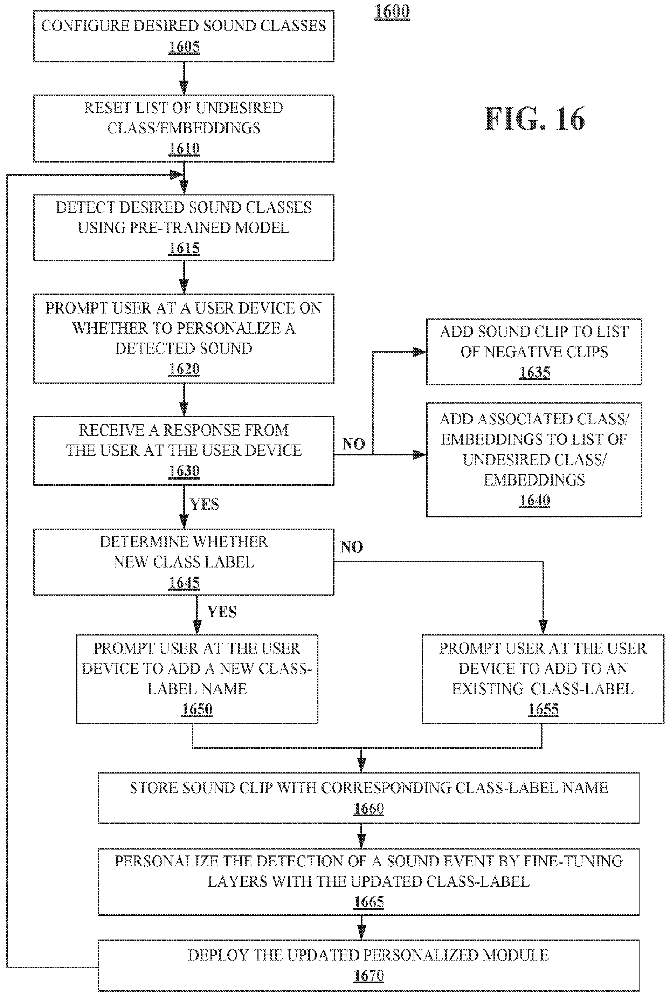

An illustrative flow diagram of a process 1600 for implementing a personalization module having fine-tuning layers for personalizing a desired sound in accordance with some embodiments of the disclosed subject matter is shown in FIG. 16.

Process 1600 can be performed by the device 1200 and can, optionally, be governed by instructions that are stored in a non-transitory computer readable storage medium and that are executed by one or more processors of the device 1200. Each of the operations shown in FIG. 16 may correspond to instructions stored in a computer memory or non-transitory computer readable storage medium (e.g., a memory of the device 1200). The computer readable storage medium may include a magnetic or optical disk storage device, solid state storage devices such as Flash memory, or other non-volatile memory device or devices. The instructions stored on the computer readable storage medium may include one or more of: source code, assembly language code, object code, or other instruction format that is interpreted by one or more processors. Some operations in process 1600 may be combined and/or the order of some operations may be changed.

In some embodiments, process 1600 can be performed by multiple devices (e.g., devices 100, 110, 120, 130, and 140 in FIG. 1). For example, as each of the different devices may have different memory capacities and/or different processing capabilities, process 1600 can be divided between devices in the same environment. In a more particular example, some devices within the same household environment having larger memory capacities can be assigned to store sound clips and other sound recordings, while other devices within the same household environment having greater processing capabilities can be assigned to use the one or more pre-trained sound models to detect relevant and/or interesting sounds in an environment and to execute the personalization module to personalize a desired sound.

At 1605, process 1600 can begin by configuring the desired sound classes. For example, in some embodiments, the user can be provided with personalization options in which the user can select from different sound classes of interest (e.g., only siren sounds and beep sounds, but not bird sounds). In continuing this example, the user can select particular sounds of interest from a list of sound classes or the personalization options can prompt the user with questions regarding the types of sounds that the user is interested in receiving notifications. These desired sound classes can be associated with a particular device (e.g., an outdoor security camera device) and can determine which pre-trained sound models to transmit and/or update with the particular device, where different devices can each include a different number and different types of sound models.

Additionally or alternatively, as described above, the user can be provided with personalization options that include selecting one or more detection modes. For example, as shown in FIGS. 13 and 14, the one or more pre-trained sound models 1220 can be configured to allow the user to select from one or more particular detection modes, such as an indoor or home sounds mode, an outdoor sounds mode, a health sounds mode, and/or a security sounds mode. In response to selecting one of these detection modes, the one or more pre-trained sound models 1220 can be used to detect sounds within relevant sound classes that fall in the selected detection mode or modes. Additionally, in some embodiments, the pre-trained sound models 1220 that correspond to the selected detection mode can be transmitted to the device for detecting incoming sounds, where different devices in the environment can have different detection modes or different combinations of detection modes.

At 1610, in some embodiments, process 1600 can reset or otherwise initialize the list of undesired sound classes and/or undesired embeddings.

At 1615, process 1600 can detect whether a sound event likely belongs to one of the desired sound classes using one or more pre-trained sound models. For example, as shown in FIG. 12, microphone 1210 of device 1200 can detect sounds occurring within an environment of device 1200, where device 1200 can determine whether an interesting sound in a desired sound class has been detected using the one or more pre-trained sound models 1220 (e.g., a sound class that was selected by the user as being a desired sound class). In another example, as shown in FIG. 13, in response to receiving a sound from microphone 1210, a multi-class model 1220 can determine whether the sound is an interesting sound that falls within a particular sound class that one of the sound models was trained to detect.

At 1620, process 1600 can determine whether to prompt the user at the device on whether to personalize a detected sound.

According to the invention, as shown in FIG. 12, the one or more pre-trained sound models 1220 used to detect a sound event, classify the sound event as likely belonging to a sound class, and generate an embedding of the sound event, where the embedding and the predicted class of the sound event, in response to the detection of the sound event by the one or more pre-trained sound models 1220, are automatically transmitted to a user of the user device 130 in the form of a notification (e.g., via personalization control unit 1230).

Additionally or alternatively, the one or more pre-trained sound models 1220 detect a sound event, classify the sound event as likely belonging to a sound class, and generate an embedding of the sound event, where the embedding and the predicted class of the sound are transmitted to personalization control unit 1230. Personalization control unit 1230 can then, in turn, determine whether the user should be notified of the sound event. This determination can include, for example, determining whether the user of the user device 130 has previously indicated a lack of interest in the same or similar sound events (e.g., whether the predicted class and/or the embedding of the sound event matches an undesired sound class or undesired embedding that is stored in user device 1200, such as the undesired class/embeddings storage 1250). In continuing this example, in response to determining that the predicted class and/or the embedding of the sound event matches an undesired sound class or undesired embedding that is stored in user device 1200, process 1600 can determine that the user of the user device (e.g., user device 130) should not be notified of sound event and/or receive an option to personalize the detected sound.

In response to determining that the user of the user device should be prompted to indicate whether to personalize a detected sound, process 1600 transmits a personalized sound discovery notification to the user of the user device (e.g., user device 130). This personalized sound discovery notification can be, for example, a pop-up notification, an application notification, an email message, a short message service (SMS) message, a multimedia messaging service (MMS) message, an unstructured supplementary service data (USSD) message, or any other suitable message to an electronic device that informs the user of the sound event and prompts the user to indicate whether to personalize the sound event. The personalized sound discovery notification can include any suitable information about the detected sound (e.g., a time that the sound was detected, a sound clip of the detected sound, the name of the device and/or device information corresponding to the device having the microphone that detected the sound, the predicted class or other information determined by the one or more pre-trained sound models, etc.).

At 1630, process 1600 receives a response from the user of the user device concerning whether to personalize a detected sound. For example, the response to personalize a detected sound can be received when the user of the user device selected an appropriate interface element (e.g., a "YES" button) on the sound discovery notification.

In response to determining that the response indicates that the user of the user device is not interested in personalizing the detected sound (e.g., based on the sound discovery notification being ignored or unselected for a particular period of time, based on a particular interface element being selected on the sound discovery notification, etc.), process 1600 can add the sound clip of the detected sound to a list of negative sound clips at 1635. Additionally or alternatively, process 1600 can add the embedding of the detected sound and the predicted class of the detected sound to a list of undesired sound classes and/or embeddings. As shown in FIG. 12, the list of negative sound clips and the list of undesired sound classes and/or embeddings can be stored in undesired class/embeddings storage 1250.

It should be noted that the list of negative sound clips and the list of undesired sound classes and/or embeddings can be used by the personalization module to, for example, determine whether to prompt the user of the user device concerning additionally detected sounds. That is, the list of negative sound clips and the list of undesired sound classes and/or embeddings can be used by the personalization module to avoid overwhelming the user of the user device with sound discovery notifications. For example, referring back to 1620 of FIG. 16, the personalization module or the personalization control unit can determine whether the user should be notified about a detected sound, which can include determining whether the user of the user device has previously indicated a lack of interest in the same or similar sound events. **In** a more particular example, personalization control unit 1230 of FIG. 12 can determine whether the predicted class and/or the embedding of the sound event matches an undesired sound class or undesired embedding that is stored in user device 1200, such as the undesired class/embeddings storage 1250. In response to determining that the predicted class and/or the embedding of the sound event matches an undesired sound class or undesired embedding that is stored in user device 1200, process 1600 can determine that the user of the user device (e.g., user device 130) should not be notified of sound event and/or receive an option to personalize the detected sound.

In some embodiments, in response to receiving the sound discovery notification or any other suitable prompt about the detected sound, the user can review the sound clip of the detected sound and the predicted class of the detected sound and can determine that the detected sound does not belong to the sound class predicted by the one or more pre-trained sound models. Upon the response to the prompt indicating that the detected sound does not belong to the sound class predicted by the one or more pre-trained sound models, the sound clip of the detected sound can be added to a list of negative sound clips at 1635. It should be noted that a training data set can be generated to include negative examples, such as the list of negative sound clips, where the training data set can be used to train the pre-trained sound models in any suitable manner based on the type of machine learning model used to implement the sound model. For example, if the pre-trained sound model includes weights and architecture for a neural network, supervised training with backpropagation may be used to further train the pre-trained sound model with the training data set that includes these negative examples.

Alternatively, referring back to 1630 of FIG. 16, in response to determining that the response to the prompt indicates that the user of the user device is interested in personalizing the detected sound (e.g., based on the sound discovery notification being selected within a particular period of time, based on a particular interface element being selected on the sound discovery notification, etc.), process 1600 can determine whether the detected sound is associated with a new class label at 1645.

In response to determining that the detected sound is to be associated with a new class label at 1645, process 1600 can prompt the user at the user device to add a new class-label name at 1650. For example, a user interface can be presented on the user device that prompts the user to input a new label for the detected sound. In continuing this example, the user using the user device can input the new label, such as "front door knock" or "microwave beep."

Alternatively, in response to determining that the detected sound is to be associated with an existing class label at 1645, process 1600 can prompt the user at the user device to add an existing class-label name at 1655. For example, a user interface can be presented on the user device that prompts the user to select a class label from a list of sound class labels, such as the "microwave beep" sound from a list of labels in the "beep" sound class.

At 1660, process 1600 can store the sound clip of the detected sound with the corresponding class-label name (e.g., "microwave beep" sound).

At 1665, process 1600 uses the stored sound clip with the corresponding class-label name and/or any other suitable information relating to the stored sound clip to fine tune or re-train the one or more pre-trained sound models. It should be noted that the personalization module, such as personalization module 1240 in FIG. 12, can have fine-tuning layers added after the one or more pre-trained sound models, where the one or more pre-trained sound models are fine-tuned on-device for personalizing the sounds detected by the pre-trained sound model. For example, as shown in FIG. 15, the fine-tuning layers 1510 can be added after the portion where the embedding is extracted from the one or more pre-trained sound models 1220, where the fine-tuning layers 1510 of the personalization module 1240 are used to fine-tune the personalization module 1240 using stored sound clips that have been selected by the user of the user device 130 for personalization.

At 1670, once fine-tuned, the updated personalization module having the retrained sound models can then be deployed to detect sounds in the environment of the device. For example, as shown in FIG. 15, the updated personalization module can be used for generating personalized class-labels of sound events. In a more example, the fine-tuned personalization module can be used to personalize a particular sound event within a sound class (e.g., identifying a microwave beep from other beeps that fall in the beep class), to remove false positives for a particular sound class (e.g., preventing a microwave beep from triggering a smoke alarm sound class), and/or to add a sound event to an existing class or a new class (e.g., ensuring that an out-of-spec smoke alarm or doorbell that was not previously detected by the one or more pre-trained sound models 1220 can be added to the smoke alarm sound class or the doorbell sound class, respectively).

In some embodiments, the personalization module can be continuously updated for the existing class-label based on user feedback.

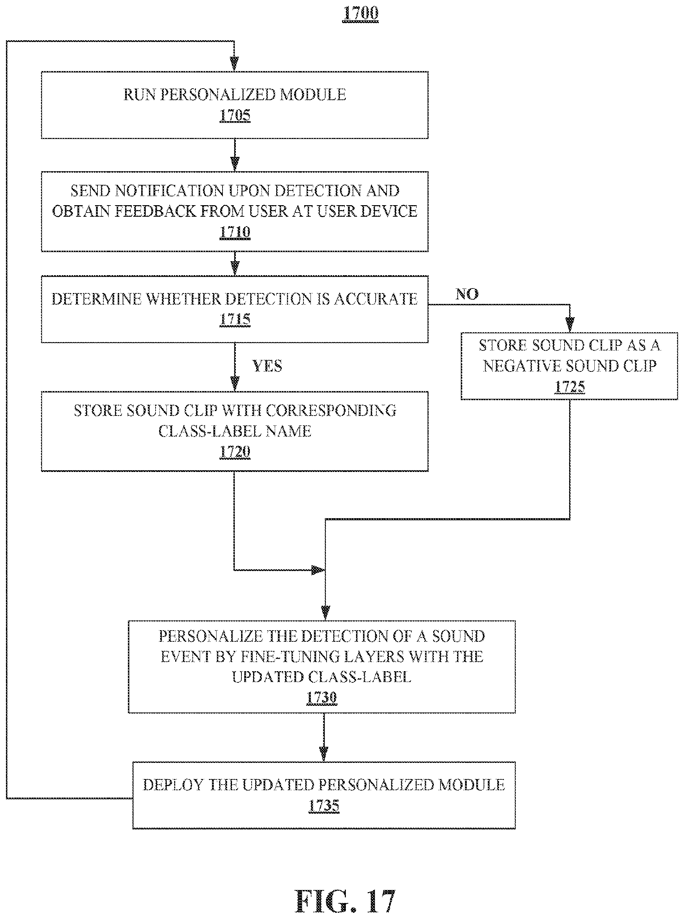

An illustrative flow diagram of a process 1700 for updating a personalization module in accordance with some embodiments of the disclosed subject matter is shown in FIG. 17.

Similar to process 1600, process 1700 can be performed by the device 1200 and can, optionally, be governed by instructions that are stored in a non-transitory computer readable storage medium and that are executed by one or more processors of the device 1200. Each of the operations shown in FIG. 17 may correspond to instructions stored in a computer memory or non-transitory computer readable storage medium (e.g., a memory of the device 1200). The computer readable storage medium may include a magnetic or optical disk storage device, solid state storage devices such as Flash memory, or other non-volatile memory device or devices. The instructions stored on the computer readable storage medium may include one or more of: source code, assembly language code, object code, or other instruction format that is interpreted by one or more processors. Some operations in process 1700 may be combined and/or the order of some operations may be changed.

At 1705, process 1700 can begin by executing the personalization module 1805, such as the personalization module 1240 in FIG. 12, to detect sounds within an environment. For example, as shown in FIG. 12, microphone 1210 of device 1200 can detect sounds occurring within an environment of device 1200, where device 1200 can determine whether an interesting sound has been detected. In continuing this example, device 1200 can include one or more pre-trained sound models 1220 that can determine whether a sound is deemed an interesting sound as likely belonging to one of the sound classes or categories that the sound models 1220 are trained to detect.

It should be noted that, in some embodiments, the user can be provided with personalization options in which the user can select from different sound classes of interest (e.g., only siren sounds and beep sounds, but not bird sounds). For example, the user can select particular sounds of interest from a list of sound classes or the personalization options can prompt the user with questions regarding the types of sounds that the user is interested in receiving notifications. These desired sound classes can be associated with a particular device (e.g., an outdoor security camera device) and can determine which pre-trained sound models to transmit and/or update with the particular device, where different devices can each include a different number and different types of sound models.

Additionally or alternatively, as described above, the user can be provided with personalization options that include selecting one or more detection modes. For example, as shown in FIGS. 13 and 14, the one or more pre-trained sound models 1220 can be configured to allow the user to select from one or more particular detection modes, such as an indoor or home sounds mode, an outdoor sounds mode, a health sounds mode, and/or a security sounds mode. In response to selecting one of these detection modes, the one or more pre-trained sound models 1220 can be used to detect sounds within relevant sound classes that fall in the selected detection mode or modes. Additionally, in some embodiments, the pre-trained sound models 1220 that correspond to the selected detection mode can be transmitted to the device for detecting incoming sounds, where different devices in the environment can have different detection modes or different combinations of detection modes.

Referring back to FIG. 17, in response to executing the personalization module at 1705 and detecting a sound event, process 1600 transmits a notification to a user at a user device for obtaining feedback relating to the sound event at 1710.

In some embodiments, as shown in FIG. 12, the one or more pre-trained sound models 1220 used to detect a sound event, classify the sound event as likely belonging to a sound class, and generate an embedding of the sound event, where the embedding and the predicted class of the sound event are, in response to the detection of the sound event by the one or more pre-trained sound models 1220, automatically transmitted to a user of the user device 130 in the form of a notification (e.g., via personalization control unit 1230).

Additionally or alternatively, the one or more pre-trained sound models 1220 used to detect a sound event, classify the sound event as likely belonging to a sound class, and generate an embedding of the sound event, where the embedding and the predicted class of the sound are transmitted to personalization control unit 1230. Personalization control unit 1230 can then, in turn, determine whether the user should be notified of the sound event. This determination can include, for example, determining whether the user of the user device 130 has previously indicated a lack of interest in the same or similar sound events (e.g., whether the predicted class and/or the embedding of the sound event matches an undesired sound class or undesired embedding that is stored in user device 1200, such as the undesired class/embeddings storage 1250). In continuing this example, in response to determining that the predicted class and/or the embedding of the sound event matches an undesired sound class or undesired embedding that is stored in user device 1200, process 1700 can determine that the user of the user device (e.g., user device 130) should not be notified of sound event and/or receive an option to personalize the detected sound.

In response to determining that the user of the user device should be prompted to indicate whether to personalize a detected sound, process 1600 transmits a personalized sound discovery notification to the user of the user device (e.g., user device 130). This personalized sound discovery notification can be, for example, a pop-up notification, an application notification, an email message, a short message service (SMS) message, a multimedia messaging service (MMS) message, an unstructured supplementary service data (USSD) message, or any other suitable message to an electronic device that informs the user of the sound event and prompts the user to indicate the accuracy of the sound detection. For example, the personalized sound discovery notification can include any suitable information about the detected sound (e.g., a time that the sound was detected, a sound clip of the detected sound, the name of the device and/or device information corresponding to the device having the microphone that detected the sound, the predicted class or other information determined by the one or more pre-trained sound models, etc.) and the user of the user device can be prompted to indicate whether the detected sound belongs in the predicted sound class. In another example, in response to the one or more pre-trained sound models indicating a high level of confidence that the detected sound belongs to a particular sound class, the personalized sound discovery notification can be pre-populated with a predicted label (e.g., the sound model has determined that the detected sound is likely a "microwave beep" in the "beep" sound class).

In response to the user indicating that the detection of the sound event is accurate (e.g., that the detected sound belongs in the predicted sound class or that the predicted label of the detected sound is correct) at 1715, process 1700 can store a sound clip with the corresponding class-label name at 1720. For example, the personalization module uses one or more pre-trained models to detect a sound occurring within an environment and to generate a preliminary class label for the sound class that the detect sound likely belongs to. In response to the user indicating that the detection of the sound event is accurate, the personalization module can label the sound clip associated with the detected sound using the preliminary class label and can store the labeled sound clip as a positive clip in personalized data storage, such as personalized data storage 1260.

Alternatively, in response to the user indicating that the detection of the sound event is not accurate (e.g., that the detected sound does not belong in the predicted sound class) at 1715, process 1700 can store a sound clip as a negative sound clip at 1725. For example, the personalization module can use one or more pre-trained models to detect a sound occurring within an environment and can generate a preliminary class label for the sound class that the detect sound likely belongs to. In response to the user indicating that the detection of the sound event is not accurate, the personalization module can store the sound clip as a negative clip in personalized data storage, such as personalized data storage 1260 or undesired class/embeddings storage 1250.

It should be noted that, as devices can have different memory capacities, process 1700 can use selection criterion (e.g., confidence values, evaluation scores, relevance scores, etc.) to determine which sound clips to store in personalized data storage, such as personalized data storage 1260 or undesired class/embeddings storage 1250. It should also be noted that process 1700 can minimize the size of sound clips (e.g., pre-loaded negative clips) such that there is enough capacity to store data collected from the device. It should further be noted that process 1700 can trim the recorded sound to remove portions at the beginning or end of the recorded sound to generate a sound clip (e.g., a "doorbell" sound clip in which beginning or end portions of the sound recorded by a microphone that do not include the sound of the doorbell are removed).

At 1730, process 1700 can use the stored sound clip with the corresponding class-label name and the stored negative sound clip to fine tune or re-train the one or more pre-trained sound models. As described above, it should be noted that the personalization module, such as personalization module 1240 in FIG. 12, can have fine-tuning layers added after the one or more pre-trained sound models, where the one or more pre-trained sound models are fine-tuned on-device for personalizing the sounds detected by the pre-trained sound model. For example, as shown in FIG. 15, the fine-tuning layers 1510 can be added after the portion where the embedding is extracted from the one or more pre-trained sound models 1220, where the fine-tuning layers 1510 of the personalization module 1240 can fine-tune the personalization module 1240 using stored sound clips that have been selected by the user of the user device 130 and the stored negative sound clips for personalization.

It should be noted that a training data set for a sound model may include positive examples and negative examples of the sound the sound model is trained to detect. Sound clips with class labels that match the class label of a sound model may be added to the training data set for that sound model as positive examples. For example, sound clips labeled as belonging to the "doorbell" class may be added to the training data set for the sound model for the doorbell class as positive examples. Sound clips with labels that do not match the label of a sound model may be added to the training data set for that sound model as negative examples. For example, sound clips labeled as "microwave beep" or "door opening" may be added to the training set for the sound model for the security alarm class as negative examples. In another example, sound clips that were indicated by the user of the user device as not being accurate detections for the predicted sound class may be added to the sound model for the particular sound class as negative examples. This may result in training data sets for sound models where the positive and negative examples are sounds that occur within the environment. For example, the sound clips in the positive examples for the sound model for the doorbell class may be the sound of the doorbell in the environment, as compared to the positive examples used in the pre-training of the sound model, which may be the sounds of various doorbells, and sounds used as doorbell sounds, from many different environments but not from the environment the sound model operates in after being pre-trained and stored on a device.

It should also be noted that the same labeled sound clip may be used as both positive and negative examples in the training data sets for different sound models. For example, a sound clip labeled "microwave beep" may be a positive example for the sound model for the beep class and a negative example for the sound model for the security alarm class.

Augmentation of labeled sound clips may be used to increase the number of sound clips available for training data sets. For example, a single labeled sound clip may have room reverb, echo, background noises, or other augmentations applied through audio processing in order to generate additional sound clips with the same label. This may allow for a single labeled sound clip to serve as the basis for the generation of multiple additional labeled sound clips, each of which may serve as positive and negative examples in the same manner as the sound clip they were generated from.

The training data sets created for the sound models may be used to train the sound models. Each sound model may be trained with the training data set generated for it from the sound clips, for example, the training data set whose positive examples have labels that match the label of the sound model. The sound models may be trained using the training data sets in any suitable manner. For example, the sound models may be models for neural networks, which may be trained using, for example, backpropagation based on the errors made by the sound model when evaluating the sound clips that are positive and negative examples from the training data set of the sound the sound model is trained to detect. This may allow the sound models to be trained with sounds specific to the environment that the sound models are operating in, for example, training the sound model for the doorbell to detect the sound of the environment's specific doorbell, or training the sound model for coughs to detect the sound of the coughs of the environment's occupants. This may localize the sound models to the environment in which they are operating, further training the sound models beyond the pre-training on donated or synthesized data sets of sounds that may represent the sounds of various different environments. Pre-trained sound models that detect the same sound and are operating on devices in different environments may start off as identical, but may diverge as each is trained with positive examples of the sound from its separate environment, localizing each sound model to its environment.

Training of the sound models may occur on individual devices within the environment, and may also be distributed across the devices within the environment. The training may occur only on devices that are members of the environment-specific network, to prevent the labeled sound clips from being transmitted outside of the environment or stored on devices that will leave the environment and do not belong to non-guest occupants of the environment unless authorized by a non-guest occupant of the environment. Different devices in the environment that are members of the environment-specific network may have different available computing resources, including different levels of volatile and non-volatile memory and different general and special purpose processors. Some of the devices in the environment may be able to train sound models on their own. For example, a phone, tablet, laptop, or hub device may have sufficient computational resources to train sound models using the labeled sound clips in the training data sets without assistance from any other device in the environment. Such a device may also perform augmentation on label sound clips to generate additional sound clips for the training data sets.

Devices that do not have sufficient computational resources to train sound models on their own may participate in federated training of the sound models. In federated training, the training of a sound model may be divided into processing jobs which may require fewer computational resources to perform than the full training. The processing jobs may be distributed to devices that are members of the environment-specific network and do not have the computational resource to train the sound models on their own, including devices that do not have microphones or otherwise did not record sound used to generate the sound clips. These devices may perform the computation needed to complete any processing jobs they receive and return the results. A device may receive any number of processing jobs, either simultaneously or sequentially, depending on the computational resources available on that device. For example, devices with very small amounts of volatile and non-volatile memory may receive only one processing job at time. The training of a sound model may be divided into processing jobs by a device that is a member of the environment-specific network and does have the computation resources to train a sound model on its own, for example, a phone, tablet, laptop, or hub device. This device may manage the sending of processing jobs to the other devices in the environment-specific network, receive results returned by those devices, and use the results to train the sound models. The recorded sounds used for training may remain within the environment, preventing sensitive data from being transmitted outside of the environment during the training of the sound models. Each of the devices may run a federating training program built-in to, or on top of, their operating systems that may allow the devices to manage and participate in federated training. The federating training program may have multiple versions to allow it to be run on devices with different amounts and types of computing resources. For example, a client version of the federated training program may run on devices that have fewer computing resources and will be the recipients of processing jobs, while a server version of the federated training program may run on devices that have more computing resources and may generate and send out the processing jobs and receive the results of the processing jobs.

Referring back to FIG. 17, at 1735, once fine-tuned, the updated personalization module having the re-trained sound models can then be deployed to detect sounds in the environment of the device. For example, as shown in FIG. 15, the updated personalization module can be used for generating personalized class-labels of sound events. In a more example, the fine-tuned personalization module can be used to personalize a particular sound event within a sound class (e.g., identifying a microwave beep from other beeps that fall in the beep class), to remove false positives for a particular sound class (e.g., preventing a microwave beep from triggering a smoke alarm sound class), and/or to add a sound event to an existing class or a new class (e.g., ensuring that an out-of-spec smoke alarm or doorbell that was not previously detected by the one or more pre-trained sound models 1220 can be added to the smoke alarm sound class or the doorbell sound class, respectively).

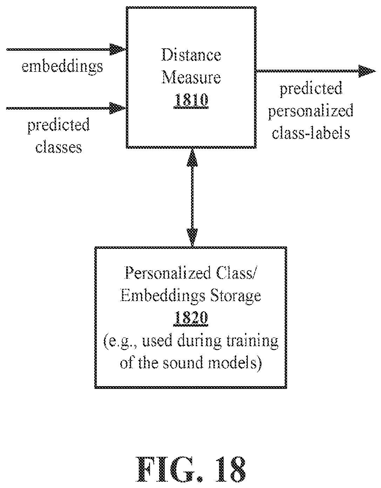

In some embodiments, referring back to FIG. 12, device 1200 can select a personalization module that does not include fine-tuning layers (not in accordance with the wording of the claimed invention) for fine-tuning the one or more pre-trained sound models. Rather, device 1200 can select a personalization module that performs a distance measurement to personalize sound events within a particular class. For example, as shown in FIG. 18, device 1200 can select the personalization module 1240 that performs a distance measurement 1810 that determines whether a predicted class and/or an embedding of a detect sound matches the stored sound classes or the stored embeddings that correspond to the personalized class-labels in a personalized class/embeddings storage 1820. The personalization module 1240 can then be used for generating personalized class-labels of sound events. For example, the personalization module 1240 that performs a distance measurement can be used to personalize a particular sound event within a sound class (e.g., identifying a microwave beep from other beeps that fall in the beep class based on similarity to stored embeddings) and/or to remove false positives for a particular sound class (e.g., preventing a microwave beep from triggering a smoke alarm sound class).

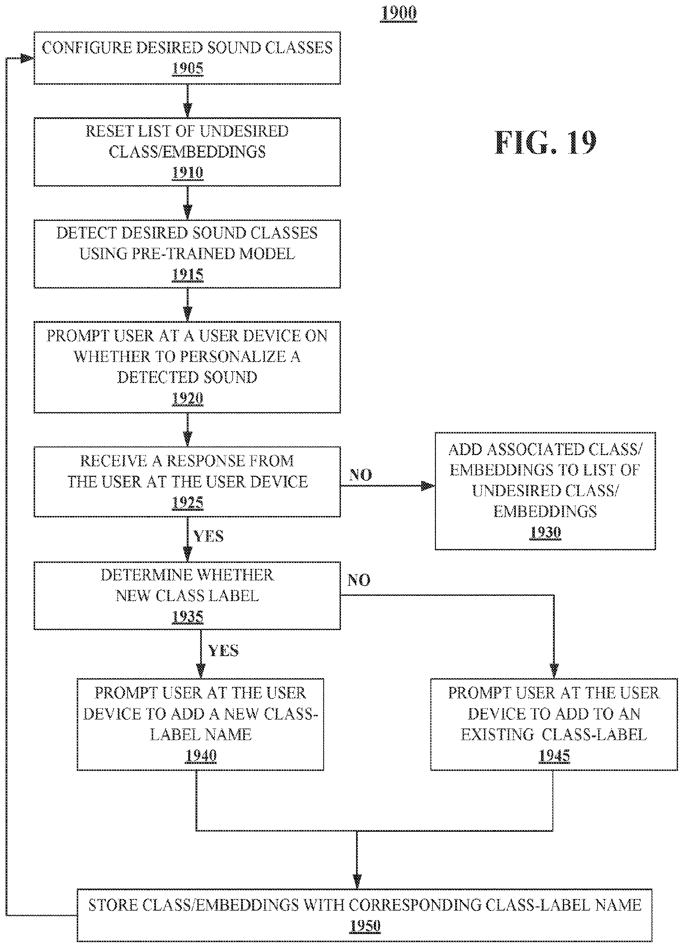

An illustrative flow diagram of a process 1900 for implementing a personalization module that performs a distance measurement to personalize sound events within a particular class in accordance with some embodiments (not in accordance with the claimed invention) of the disclosed subject matter is shown in FIG. 19.

Process 1900 can be performed by the device 1200 and can, optionally, be governed by instructions that are stored in a non-transitory computer readable storage medium and that are executed by one or more processors of the device 1200. Each of the operations shown in FIG. 19 may correspond to instructions stored in a computer memory or non-transitory computer readable storage medium (e.g., a memory of the device 1200). The computer readable storage medium may include a magnetic or optical disk storage device, solid state storage devices such as Flash memory, or other non-volatile memory device or devices. The instructions stored on the computer readable storage medium may include one or more of: source code, assembly language code, object code, or other instruction format that is interpreted by one or more processors. Some operations in process 1900 may be combined and/or the order of some operations may be changed.

At 1905, process 1900 can begin by configuring the desired sound classes. For example, in some embodiments, the user can be provided with personalization options in which the user can select from different sound classes of interest (e.g., only siren sounds and beep sounds, but not bird sounds). In continuing this example, the user can select particular sounds of interest from a list of sound classes or the personalization options can prompt the user with questions regarding the types of sounds that the user is interested in receiving notifications. These desired sound classes can be associated with a particular device (e.g., an outdoor security camera device) and can determine which pre-trained sound models to transmit and/or update with the particular device, where different devices can each include a different number and different types of sound models.

Additionally or alternatively, as described above, the user can be provided with personalization options that include selecting one or more detection modes. For example, as shown in FIGS. 13 and 14, the one or more pre-trained sound models 1220 can be configured to allow the user to select from one or more particular detection modes, such as an indoor or home sounds mode, an outdoor sounds mode, a health sounds mode, and/or a security sounds mode. In response to selecting one of these detection modes, the one or more pre-trained sound models 1220 can be used to detect sounds within relevant sound classes that fall in the selected detection mode or modes. Additionally, in some embodiments, the pre-trained sound models 1220 that correspond to the selected detection mode can be transmitted to the device for detecting incoming sounds, where different devices in the environment can have different detection modes or different combinations of detection modes.

At 1910, in some embodiments, process 1900 can reset or otherwise initialize the list of undesired sound classes and/or undesired embeddings.

At 1915, process 1900 can detect whether a sound event likely belongs to one of the desired sound classes using one or more pre-trained sound models. For example, as shown in FIG. 12, microphone 1210 of device 1200 can detect sounds occurring within an environment of device 1200, where device 1200 can determine whether an interesting sound in a desired sound class has been detected using the one or more pre-trained sound models 1220 (e.g., a sound class that was selected by the user as being a desired sound class). In another example, as shown in FIG. 13, in response to receiving a sound from microphone 1210, a multi-class model 1220 can determine whether the sound is an interesting sound that falls within a particular sound class that one of the sound models was trained to detect.

At 1920, process 1900 can determine whether to prompt the user at the device on whether to personalize a detected sound.

In some embodiments, as shown in FIG. 12, the one or more pre-trained sound models 1220 can detect a sound event, can classify the sound event as likely belonging to a sound class, and can generate an embedding of the sound event, where the embedding and the predicted class of the sound event can, in response to the detection of the sound event by the one or more pre-trained sound models 1220, be automatically transmitted to a user of the user device 130 in the form of a notification (e.g., via personalization control unit 1230).

Additionally or alternatively, the one or more pre-trained sound models 1220 can detect a sound event, can classify the sound event as likely belonging to a sound class, and can generate an embedding of the sound event, where the embedding and the predicted class of the sound can be transmitted to personalization control unit 1230. Personalization control unit 1230 can then, in turn, determine whether the user should be notified of the sound event. This determination can include, for example, determining whether the user of the user device 130 has previously indicated a lack of interest in the same or similar sound events (e.g., whether the predicted class and/or the embedding of the sound event matches an undesired sound class or undesired embedding that is stored in user device 1200, such as the undesired class/embeddings storage 1250). In continuing this example, in response to determining that the predicted class and/or the embedding of the sound event matches an undesired sound class or undesired embedding that is stored in user device 1200, process 1900 can determine that the user of the user device (e.g., user device 130) should not be notified of sound event and/or receive an option to personalize the detected sound.

In response to determining that the user of the user device should be prompted to indicate whether to personalize a detected sound, process 1900 can transmit a personalized sound discovery notification to the user of the user device (e.g., user device 130). This personalized sound discovery notification can be, for example, a pop-up notification, an application notification, an email message, a short message service (SMS) message, a multimedia messaging service (MMS) message, an unstructured supplementary service data (USSD) message, or any other suitable message to an electronic device that informs the user of the sound event and prompts the user to indicate whether to personalize the sound event. The personalized sound discovery notification can include any suitable information about the detected sound (e.g., a time that the sound was detected, a sound clip of the detected sound, the name of the device and/or device information corresponding to the device having the microphone that detected the sound, the predicted class or other information determined by the one or more pre-trained sound models, etc.).

At 1930, process 1900 can receive a response from the user of the user device concerning whether to personalize a detected sound. For example, the response to personalize a detected sound can be received when the user of the user device selected an appropriate interface element (e.g., a "YES" button) on the sound discovery notification.

In response to determining that the response indicates that the user of the user device is not interested in personalizing the detected sound (e.g., based on the sound discovery notification being ignored or unselected for a particular period of time, based on a particular interface element being selected on the sound discovery notification, etc.), process 1900 can add the embedding of the detected sound and the predicted class of the detected sound to a list of undesired sound classes and/or embeddings. As shown in FIG. 12, the list of negative sound clips and the list of undesired sound classes and/or embeddings can be stored in undesired class/embeddings storage 1250.

It should be noted that the list of undesired sound classes and/or embeddings can be used by the personalization module to, for example, determine whether to prompt the user of the user device concerning additionally detected sounds. That is, the list of negative sound clips and the list of undesired sound classes and/or embeddings can be used by the personalization module to avoid overwhelming the user of the user device with sound discovery notifications. For example, referring back to 1920 of FIG. 19, the personalization module or the personalization control unit can determine whether the user should be notified about a detected sound, which can include determining whether the user of the user device has previously indicated a lack of interest in the same or similar sound events. In a more particular example, personalization control unit 1230 of FIG. 12 can determine whether the predicted class and/or the embedding of the sound event matches an undesired sound class or undesired embedding that is stored in user device 1200, such as the undesired class/embeddings storage 1250. In response to determining that the predicted class and/or the embedding of the sound event matches an undesired sound class or undesired embedding that is stored in user device 1200, process 1900 can determine that the user of the user device (e.g., user device 130) should not be notified of sound event and/or receive an option to personalize the detected sound.

Alternatively, referring back to 1925 of FIG. 19, in response to determining that the response to the prompt indicates that the user of the user device is interested in personalizing the detected sound (e.g., based on the sound discovery notification being selected within a particular period of time, based on a particular interface element being selected on the sound discovery notification, etc.), process 1900 can determine whether the detected sound is associated with a new class label at 1935.

In response to determining that the detected sound is to be associated with a new class label at 1935, process 1900 can prompt the user at the user device to add a new class-label name at 1940. For example, a user interface can be presented on the user device that prompts the user to input a new label for the detected sound. In continuing this example, the user using the user device can input the new label, such as "front door knock" or "microwave beep."

Alternatively, in response to determining that the detected sound is to be associated with an existing class label at 1935, process 1900 can prompt the user at the user device to add an existing class-label name at 1945. For example, a user interface can be presented on the user device that prompts the user to select a class label from a list of sound class labels, such as the "microwave beep" sound from a list of labels in the "beep" sound class.

At 1950, process 1900 can store the predicted sound class and/or the embedding from the one or more pre-trained models with the user-specified class-label name and/or any other suitable information relating to the detected sound to personalize a desired sound. The personalization module can then detect sound events by determining whether an inputted class or embedding of a sound event matches the stored class/embeddings that correspond to personalized class-labels. In a more example, the personalization module can be used to personalize a particular sound event within a sound class (e.g., identifying a microwave beep from other beeps that fall in the beep class) and/or to remove false positives for a particular sound class (e.g., preventing a microwave beep from triggering a smoke alarm sound class).

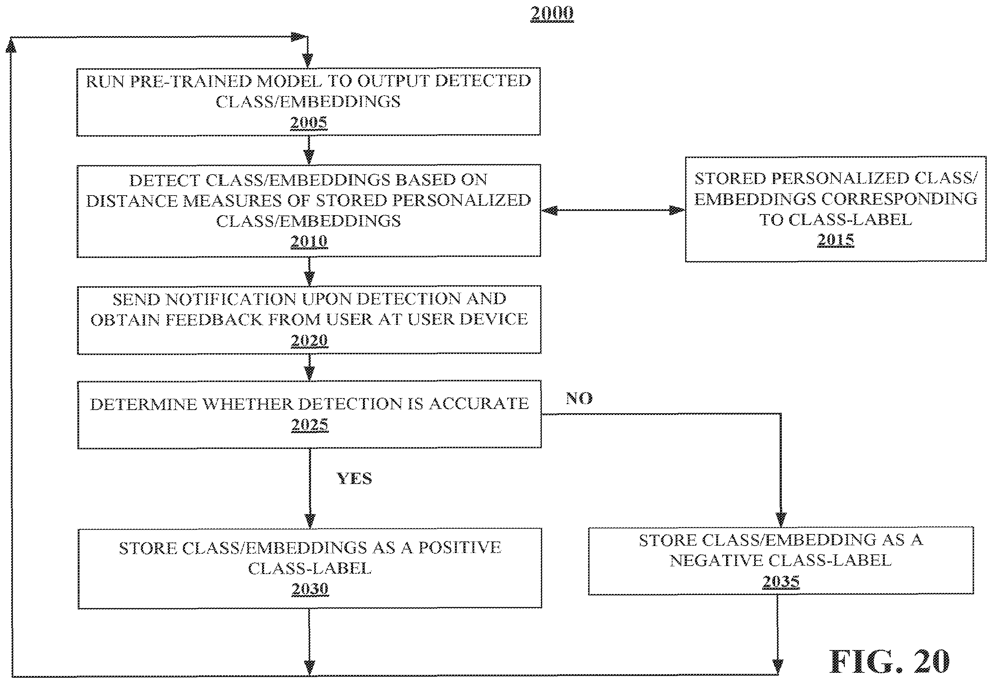

Similar to FIG. 17, FIG. 20 shows an illustrative flow diagram of a process 2000 for continuously updating a personalization module based on user feedback in accordance with some embodiments of the disclosed subject matter.

An illustrative flow diagram of a process 2000 for updating a personalization module that performs a distance measurement to detect if an input class and/or embeddings of a sound event match the stored class and/or embeddings that correspond to personalized class-labels in accordance with some embodiments (not in accordance with the claimed invention) of the disclosed subject matter is shown in FIG. 20

Similar to process 1900, process 2000 can be performed by the device 1200 and can, optionally, be governed by instructions that are stored in a non-transitory computer readable storage medium and that are executed by one or more processors of the device 1200. Each of the operations shown in FIG. 20 may correspond to instructions stored in a computer memory or non-transitory computer readable storage medium (e.g., a memory of the device 1200). The computer readable storage medium may include a magnetic or optical disk storage device, solid state storage devices such as Flash memory, or other non-volatile memory device or devices. The instructions stored on the computer readable storage medium may include one or more of: source code, assembly language code, object code, or other instruction format that is interpreted by one or more processors. Some operations in process 2000 may be combined and/or the order of some operations may be changed.

At 2005, process 2000 can begin by executing the personalization module 1805, such as the personalization module 1240 in FIG. 12, to detect sounds within an environment. For example, as shown in FIG. 12, microphone 1210 of device 1200 can detect sounds occurring within an environment of device 1200, where device 1200 can determine whether an interesting sound has been detected. In continuing this example, device 1200 can include one or more pre-trained sound models 1220 that can determine whether a sound is deemed an interesting sound as likely belonging to one of the sound classes or categories that the sound models 1220 are trained to detect. In some embodiments, as shown in FIG. 12, the one or more pre-trained sound models 1220 can detect a sound event, can classify the sound event as likely belonging to a sound class, and can generate an embedding of the sound event.

As described above, at 2010, process 200 can access stored personalized class/embeddings corresponding to a class label and can detect whether the predicted sound class and/or the generated embedding of the sound event match the stored personalized class/embeddings corresponding to a class label using techniques, such as Euclidean distance, cosine similarity, etc. For example, a sound event can be determined as being a relevant sound event based on the distance measure between the class/embeddings of the detected sound and the stored class/embeddings at 2015.

In response to executing the personalization module at 2005 and detecting a relevant sound event having a predicted sound class and embedding based on distance measures of stored personalized class/embeddings, process 2000 can determine whether to transmit a notification to a user at a user device for obtaining feedback relating to the sound event at 2020. For example, based on the distance measure between the class/embeddings of the detected sound and the stored class/embeddings, the notification can be automatically transmitted to a user of the user device (e.g., via personalization control unit 1230).

In response to determining that the user of the user device should be prompted to indicate whether to personalize a detected sound, process 1600 can transmit a personalized sound discovery notification to the user of the user device (e.g., user device 130). This personalized sound discovery notification can be, for example, a pop-up notification, an application notification, an email message, a short message service (SMS) message, a multimedia messaging service (MMS) message, an unstructured supplementary service data (USSD) message, or any other suitable message to an electronic device that informs the user of the sound event and prompts the user to indicate the accuracy of the sound detection at 2025. For example, the personalized sound discovery notification can include any suitable information about the detected sound (e.g., a time that the sound was detected, a sound clip of the detected sound, the name of the device and/or device information corresponding to the device having the microphone that detected the sound, the predicted class or other information determined by the one or more pre-trained sound models, etc.) and the user of the user device can be prompted to indicate whether the detected sound belongs in the predicted sound class. In another example, in response to the one or more pre-trained sound models indicating a high level of confidence that the detected sound belongs to a particular sound class, the personalized sound discovery notification can be pre-populated with a predicted label (e.g., the sound model has determined that the detected sound is likely a "microwave beep" in the "beep" sound class).

In response to the user indicating that the detection of the sound event is accurate (e.g., that the detected sound belongs in the predicted sound class or that the predicted label of the detected sound is correct) at 2025, process 2000 can store the predicted class and/or the embedding associated with the detected sound as a positive class-label at 2030, such as personalized data storage 1260.

Alternatively, in response to the user indicating that the detection of the sound event is not accurate (e.g., that the detected sound does not belong in the predicted sound class) at 2025, process 2000 can store the predicted class and/or the embedding associated with the detected sound as a negative class-label at 2035.

Accordingly, process 200 can continue to use the positive labels and negative labels to perform distance measurements against the predicted classes and/or generated embeddings of additionally detected sound events.

Embodiments disclosed herein may use one or more sensors. In general, a "sensor" may refer to any device that can obtain information about its environment. Sensors may be described by the type of information they collect. For example, sensor types as disclosed herein may include motion, smoke, carbon monoxide, proximity, temperature, time, physical orientation, acceleration, location, and the like. A sensor also may be described in terms of the particular physical device that obtains the environmental information. For example, an accelerometer may obtain acceleration information, and thus may be used as a general motion sensor and/or an acceleration sensor. A sensor also may be described in terms of the specific hardware components used to implement the sensor. For example, a temperature sensor may include a thermistor, thermocouple, resistance temperature detector, integrated circuit temperature detector, or combinations thereof. In some cases, a sensor may operate as multiple sensor types sequentially or concurrently, such as where a temperature sensor is used to detect a change in temperature, as well as the presence of a person or animal.

In general, a "sensor" as disclosed herein may include multiple sensors or sub-sensors, such as where a position sensor includes both a global positioning sensor (GPS) as well as a wireless network sensor, which provides data that can be correlated with known wireless networks to obtain location information. Multiple sensors may be arranged in a single physical housing, such as where a single device includes movement, temperature, magnetic, and/or other sensors. Such a housing also may be referred to as a sensor or a sensor device. For clarity, sensors are described with respect to the particular functions they perform and/or the particular physical hardware used, when such specification is necessary for understanding of the embodiments disclosed herein.

A sensor may include hardware in addition to the specific physical sensor that obtains information about the environment. FIG. 21 shows an example sensor as disclosed herein. The sensor 60 may include an environmental sensor 61, such as a temperature sensor, smoke sensor, carbon monoxide sensor, motion sensor, accelerometer, proximity sensor, passive infrared (PIR) sensor, magnetic field sensor, radio frequency (RF) sensor, light sensor, humidity sensor, or any other suitable environmental sensor, that obtains a corresponding type of information about the environment in which the sensor 60 is located. A processor 64 may receive and analyze data obtained by the sensor 61, control operation of other components of the sensor 60, and process communication between the sensor and other devices. The processor 64 may execute instructions stored on a computer-readable memory 65. The memory 65 or another memory in the sensor 60 may also store environmental data obtained by the sensor 61. A communication interface 63, such as a Wi-Fi or other wireless interface, Ethernet or other local network interface, or the like may allow for communication by the sensor 60 with other devices. A user interface (UI) 62 may provide information and/or receive input from a user of the sensor. The UI 62 may include, for example, a speaker to output an audible alarm when an event is detected by the sensor 60. Alternatively, or in addition, the UI 62 may include a light to be activated when an event is detected by the sensor 60. The user interface may be relatively minimal, such as a limited-output display, or it may be a full-featured interface such as a touchscreen. Components within the sensor 60 may transmit and receive information to and from one another via an internal bus or other mechanism as will be readily understood by one of skill in the art. One or more components may be implemented in a single physical arrangement, such as where multiple components are implemented on a single integrated circuit. Sensors as disclosed herein may include other components, and/or may not include all of the illustrative components shown.

Sensors as disclosed herein may operate within a communication network, such as a conventional wireless network, and/or a sensor-specific network through which sensors may communicate with one another and/or with dedicated other devices. In some configurations one or more sensors may provide information to one or more other sensors, to a central controller, or to any other device capable of communicating on a network with the one or more sensors. A central controller may be general- or special-purpose. For example, one type of central controller is a home automation network, that collects and analyzes data from one or more sensors within the home. Another example of a central controller is a special-purpose controller that is dedicated to a subset of functions, such as a security controller that collects and analyzes sensor data primarily or exclusively as it relates to various security considerations for a location. A central controller may be located locally with respect to the sensors with which it communicates and from which it obtains sensor data, such as in the case where it is positioned within a home that includes a home automation and/or sensor network. Alternatively or in addition, a central controller as disclosed herein may be remote from the sensors, such as where the central controller is implemented as a cloud-based system that communicates with multiple sensors, which may be located at multiple locations and may be local or remote with respect to one another.

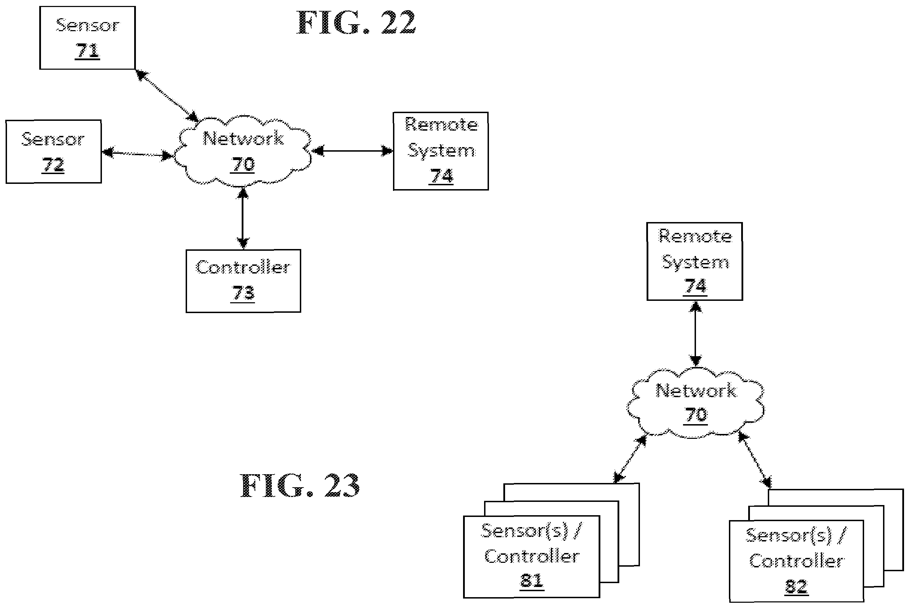

FIG. 22 shows an example of a sensor network as disclosed herein, which may be implemented over any suitable wired and/or wireless communication networks. One or more sensors 71, 72 may communicate via a local network 70, such as a Wi-Fi or other suitable network, with each other and/or with a controller 73. The controller may be a general- or special-purpose computer. The controller may, for example, receive, aggregate, and/or analyze environmental information received from the sensors 71, 72. The sensors 71, 72 and the controller 73 may be located locally to one another, such as within a single dwelling, office space, building, room, or the like, or they may be remote from each other, such as where the controller 73 is implemented in a remote system 74 such as a cloud-based reporting and/or analysis system. Alternatively or in addition, sensors may communicate directly with a remote system 74. The remote system 74 may, for example, aggregate data from multiple locations, provide instruction, software updates, and/or aggregated data to a controller 73 and/or sensors 71, 72.

The devices of the security system and home environment of the disclosed subject matter may be communicatively connected via the network 70, which may be a mesh-type network such as Thread, which provides network architecture and/or protocols for devices to communicate with one another. Typical home networks may have a single device point of communications. Such networks may be prone to failure, such that devices of the network cannot communicate with one another when the single device point does not operate normally. The mesh-type network of Thread, which may be used in the security system of the disclosed subject matter, may avoid communication using a single device. That is, in the mesh-type network, such as network 70, there is no single point of communication that may fail so as to prohibit devices coupled to the network from communicating with one another.

The communication and network protocols used by the devices communicatively coupled to the network 70 may provide secure communications, minimize the amount of power used (i.e., be power efficient), and support a wide variety of devices and/or products in a home, such as appliances, access control, climate control, energy management, lighting, safety, and security. For example, the protocols supported by the network and the devices connected thereto may have an open protocol which may carry IPv6 natively.

The Thread network, such as network 70, may be easy to set up and secure to use. The network 70 may use an authentication scheme, AES (Advanced Encryption Standard) encryption, or the like to reduce and/or minimize security holes that exist in other wireless protocols. The Thread network may be scalable to connect devices (e.g., 2, 5, 10, 20, 50, 100, 150, 200, or more devices) into a single network supporting multiple hops (e.g., so as to provide communications between devices when one or more nodes of the network is not operating normally). The network 70, which may be a Thread network, may provide security at the network and application layers. One or more devices communicatively coupled to the network 70 (e.g., controller 73, remote system 74, and the like) may store product install codes to ensure only authorized devices can join the network 70. One or more operations and communications of network 70 may use cryptography, such as public-key cryptography.

The devices communicatively coupled to the network 70 of the home environment and/or security system disclosed herein may have low power consumption and/or reduced power consumption. That is, devices efficiently communicate with one another and operate to provide functionality to the user, where the devices may have reduced battery size and increased battery lifetimes over conventional devices. The devices may include sleep modes to increase battery life and reduce power requirements. For example, communications between devices coupled to the network 70 may use the power-efficient IEEE 802.15.4 MAC/PHY protocol. In embodiments of the disclosed subject matter, short messaging between devices on the network 70 may conserve bandwidth and power. The routing protocol of the network 70 may reduce network overhead and latency. The communication interfaces of the devices coupled to the home environment may include wireless system-on-chips to support the low-power, secure, stable, and/or scalable communications network 70.

The sensor network shown in FIG. 22 may be an example of a home environment. The depicted home environment may include a structure, a house, office building, garage, mobile home, or the like. The devices of the environment, such as the sensors 71, 72, the controller 73, and the network 70 may be integrated into a home environment that does not include an entire structure, such as an apartment, condominium, or office space.

The environment can control and/or be coupled to devices outside of the structure. For example, one or more of the sensors 71, 72 may be located outside the structure, for example, at one or more distances from the structure (e.g., sensors 71, 72 may be disposed outside the structure, at points along a land perimeter on which the structure is located, and the like. One or more of the devices in the environment need not physically be within the structure. For example, the controller 73 which may receive input from the sensors 71, 72 may be located outside of the structure.

The structure of the home environment may include a plurality of rooms, separated at least partly from each other via walls. The walls can include interior walls or exterior walls. Each room can further include a floor and a ceiling. Devices of the home environment, such as the sensors 71, 72, may be mounted on, integrated with and/or supported by a wall, floor, or ceiling of the structure.

The home environment including the sensor network shown in FIG. 22 may include a plurality of devices, including intelligent, multi-sensing, network-connected devices that can integrate seamlessly with each other and/or with a central server or a cloud-computing system (e.g., controller 73 and/or remote system 74) to provide home-security and home features. The home environment may include one or more intelligent, multi-sensing, network-connected thermostats, one or more intelligent, network-connected, multi-sensing hazard detection units, and one or more intelligent, multi-sensing, network-connected entryway interface devices. The hazard detectors, thermostats, and doorbells may be the sensors 71, 72 shown in FIG. 22.

According to embodiments of the disclosed subject matter, the thermostat may detect ambient climate characteristics (e.g., temperature and/or humidity) and may control an HVAC (heating, ventilating, and air conditioning) system according to the structure. For example, the ambient client characteristics may be detected by sensors 71, 72 shown in FIG. 22, and the controller 73 may control the HVAC system (not shown) of the structure.

A hazard detector may detect the presence of a hazardous substance or a substance indicative of a hazardous substance (e.g., smoke, fire, or carbon monoxide). For example, smoke, fire, and/or carbon monoxide may be detected by sensors 71, 72 shown in FIG. 22, and the controller 73 may control an alarm system to provide a visual and/or audible alarm to the user of the home environment.

A doorbell may control doorbell functionality, detect a person's approach to or departure from a location (e.g., an outer door to the structure), and announce a person's approach or departure from the structure via audible and/or visual message that is output by a speaker and/or a display coupled to, for example, the controller 73.

In some embodiments, the home environment of the sensor network shown in FIG. 22 may include one or more intelligent, multi-sensing, network-connected wall switches, one or more intelligent, multi-sensing, network-connected wall plug. The wall switches and/or wall plugs may be the sensors 71, 72 shown in FIG. 22. The wall switches may detect ambient lighting conditions, and control a power and/or dim state of one or more lights. For example, the sensors 71, 72, may detect the ambient lighting conditions, and the controller 73 may control the power to one or more lights (not shown) in the home environment. The wall switches may also control a power state or speed of a fan, such as a ceiling fan. For example, sensors 72, 72 may detect the power and/or speed of a fan, and the controller 73 may adjust the power and/or speed of the fan, accordingly. The wall plugs may control supply of power to one or more wall plugs (e.g., such that power is not supplied to the plug if nobody is detected to be within the home environment). For example, one of the wall plugs may control the supply of power to a lamp (not shown).

In embodiments of the disclosed subject matter, the home environment may include one or more intelligent, multi-sensing, network-connected entry detectors. The sensors 71, 72 shown in FIG. 22 may be the entry detectors. The illustrated entry detectors (e.g., sensors 71, 72) may be disposed at one or more windows, doors, and other entry points of the home environment for detecting when a window, door, or other entry point is opened, broken, breached, and/or compromised. The entry detectors may generate a corresponding signal to be provided to the controller 73 and/or the remote system 74 when a window or door is opened, closed, breached, and/or compromised. In some embodiments of the disclosed subject matter, the alarm system, which may be included with controller 73 and/or coupled to the network 70 may not arm unless all entry detectors (e.g., sensors 71, 72) indicate that all doors, windows, entryways, and the like are closed and/or that all entry detectors are armed.

The home environment of the sensor network shown in FIG. 22 can include one or more intelligent, multi-sensing, network-connected doorknobs. For example, the sensors 71, 72 may be coupled to a doorknob of a door (e.g., doorknobs 122 located on external doors of the structure of the home environment). However, it should be appreciated that doorknobs can be provided on external and/or internal doors of the home environment.

The thermostats, the hazard detectors, the doorbells, the wall switches, the wall plugs, the entry detectors, the doorknobs, the keypads, and other devices of the home environment (e.g., as illustrated as sensors 71, 72 of FIG. 22 can be communicatively coupled to each other via the network 70, and to the controller 73 and/or remote system 74 to provide security, safety, and/or comfort for the environment).

A user can interact with one or more of the network-connected devices (e.g., via the network 70). For example, a user can communicate with one or more of the network-connected devices using a computer (e.g., a desktop computer, laptop computer, tablet, or the like) or other portable electronic device (e.g., a phone, a tablet, a key FOB, and the like). A webpage or application can be configured to receive communications from the user and control the one or more of the network-connected devices based on the communications and/or to present information about the device's operation to the user. For example, the user can arm or disarm the security system of the home.

One or more users can control one or more of the network-connected devices in the home environment using a network-connected computer or portable electronic device. In some examples, some or all of the users (e.g., individuals who live in the home) can register their mobile device and/or key FOBs with the home environment (e.g., with the controller 73). Such registration can be made at a central server (e.g., the controller 73 and/or the remote system 74) to authenticate the user and/or the electronic device as being associated with the home environment, and to provide permission to the user to use the electronic device to control the network-connected devices and the security system of the home environment. A user can use their registered electronic device to remotely control the network-connected devices and security system of the home environment, such as when the occupant is at work or on vacation. The user may also use their registered electronic device to control the network-connected devices when the user is located inside the home environment.

Alternatively, or in addition to registering electronic devices, the home environment may make inferences about which individuals live in the home and are therefore users and which electronic devices are associated with those individuals. As such, the home environment "learns" who is a user (e.g., an authorized user) and permits the electronic devices associated with those individuals to control the network-connected devices of the home environment (e.g., devices communicatively coupled to the network 70). Various types of notices and other information may be provided to users via messages sent to one or more user electronic devices. For example, the messages can be sent via email, short message service (SMS), multimedia messaging service (MMS), unstructured supplementary service data (USSD), as well as any other type of messaging services and/or communication protocols.

The home environment may include communication with devices outside of the home environment but within a proximate geographical range of the home. For example, the home environment may include an outdoor lighting system (not shown) that communicates information through the communication network 70 or directly to a central server or cloud-computing system (e.g., controller 73 and/or remote system 74) regarding detected movement and/or presence of people, animals, and any other objects and receives back commands for controlling the lighting accordingly.

The controller 73 and/or remote system 74 can control the outdoor lighting system based on information received from the other network-connected devices in the home environment. For example, in the event, any of the network-connected devices, such as wall plugs located outdoors, detect movement at night time, the controller 73 and/or remote system 74 can activate the outdoor lighting system and/or other lights in the home environment.

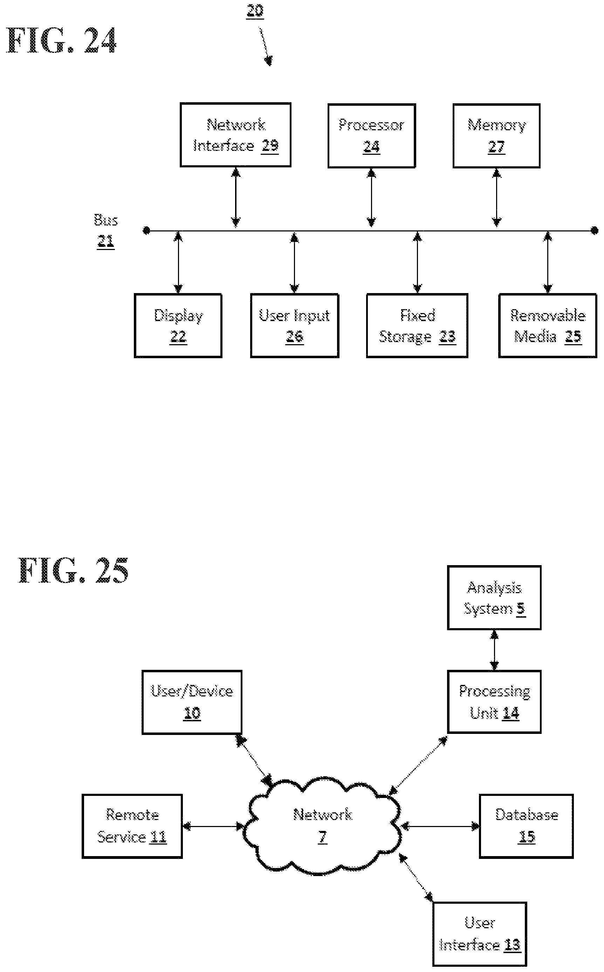

In some configurations, a remote system 74 may aggregate data from multiple locations, such as multiple buildings, multi-resident buildings, individual residences within a neighborhood, multiple neighborhoods, and the like. In general, multiple sensor/controller systems 81, 82 as previously described with respect to FIG. 25 may provide information to the remote system 74. The systems 81, 82 may provide data directly from one or more sensors as previously described, or the data may be aggregated and/or analyzed by local controllers such as the controller 73, which then communicates with the remote system 74. The remote system may aggregate and analyze the data from multiple locations, and may provide aggregate results to each location. For example, the remote system 74 may examine larger regions for common sensor data or trends in sensor data, and provide information on the identified commonality or environmental data trends to each local system 81, 82.

In situations in which the systems discussed here collect personal information about users, or may make use of personal information, the users may be provided with an opportunity to control whether programs or features collect user information (e.g., information about a user's social network, social actions or activities, profession, a user's preferences, or a user's current location), or to control whether and/or how to receive content from the content server that may be more relevant to the user. In addition, certain data may be treated in one or more ways before it is stored or used, so that personally identifiable information is removed. Thus, the user may have control over how information is collected about the user and used by a system as disclosed herein.

Embodiments of the presently disclosed subject matter may be implemented in and used with a variety of computing devices. FIG. 24 is an example computing device 20 suitable for implementing embodiments of the presently disclosed subject matter. For example, the device 20 may be used to implement a controller, a device including sensors as disclosed herein, or the like. Alternatively or in addition, the device 20 may be, for example, a desktop or laptop computer, or a mobile computing device such as a phone, tablet, or the like. The device 20 may include a bus 21 which interconnects major components of the computer 20, such as a central processor 24, a memory 27 such as Random Access Memory (RAM), Read Only Memory (ROM), flash RAM, or the like, a user display 22 such as a display screen, a user input interface 26, which may include one or more controllers and associated user input devices such as a keyboard, mouse, touch screen, and the like, a fixed storage 23 such as a hard drive, flash storage, and the like, a removable media component 25 operative to control and receive an optical disk, flash drive, and the like, and a network interface 29 operable to communicate with one or more remote devices via a suitable network connection.

The bus 21 allows data communication between the central processor 24 and one or more memory components 25, 27, which may include RAM, ROM, and other memory, as previously noted. Applications resident with the computer 20 are generally stored on and accessed via a computer readable storage medium.

The fixed storage 23 may be integral with the computer 20 or may be separate and accessed through other interfaces. The network interface 29 may provide a direct connection to a remote server via a wired or wireless connection. The network interface 29 may provide such connection using any suitable technique and protocol as will be readily understood by one of skill in the art, including digital cellular telephone, WiFi, Bluetooth(R), near-field, and the like. For example, the network interface 29 may allow the device to communicate with other computers via one or more local, wide-area, or other communication networks, as described in further detail herein.

FIG. 23 shows an example network arrangement according to an embodiment of the disclosed subject matter. One or more clients 10, 11, such as local computers, phones, tablet computing devices, and the like may connect to other devices via one or more networks 7. The network may be a local network, wide-area network, the Internet, or any other suitable communication network or networks, and may be implemented on any suitable platform including wired and/or wireless networks. The clients may communicate with one or more servers 13 and/or databases 15. The devices may be directly accessible by the clients 10, 11, or one or more other devices may provide intermediary access such as where a server 13 provides access to resources stored in a database 15. The clients 10, 11 also may access remote platforms 17 or services provided by remote platforms 17 such as cloud computing arrangements and services. The remote platform 17 may include one or more servers 13 and/or databases 15. One or more processing units 14 may be, for example, part of a distributed system such as a cloud-based computing system, search engine, content delivery system, or the like, which may also include or communicate with a database 15 and/or user interface 13. In some arrangements, an analysis system 5 may provide back-end processing, such as where stored or acquired data is preprocessed by the analysis system 5 before delivery to the processing unit 14, database 15, and/or user interface 13.

Various embodiments of the presently disclosed subject matter may include or be embodied in the form of computer-implemented processes and apparatuses for practicing those processes. Embodiments also may be embodied in the form of a computer program product having computer program code containing instructions embodied in non-transitory and/or tangible media, such as hard drives, USB (universal serial bus) drives, or any other machine readable storage medium, such that when the computer program code is loaded into and executed by a computer, the computer becomes an apparatus for practicing embodiments of the disclosed subject matter. When implemented on a general-purpose microprocessor, the computer program code may configure the microprocessor to become a special-purpose device, such as by creation of specific logic circuits as specified by the instructions.

Embodiments may be implemented using hardware that may include a processor, such as a general purpose microprocessor and/or an Application Specific Integrated Circuit (ASIC) that embodies all or part of the techniques according to embodiments of the disclosed subject matter in hardware and/or firmware. The processor may be coupled to memory, such as RAM, ROM, flash memory, a hard disk or any other device capable of storing electronic information. The memory may store instructions adapted to be executed by the processor to perform the techniques according to embodiments of the disclosed subject matter.

The foregoing description, for the purpose of explanation, has been described with reference to specific embodiments. However, the illustrative discussions above are not intended to be exhaustive or to limit embodiments of the disclosed subject matter to the precise forms disclosed. Many modifications and variations are possible within the scope of the appended claims. The embodiments were chosen and described in order to explain the principles of embodiments of the disclosed subject matter and their practical applications, to thereby enable others skilled in the art to utilize those embodiments as well as various embodiments with various modifications as may be suited to the particular use contemplated.

## Claims

1. A computer-implemented method for personalized sound discovery performed by a data processing apparatus, the method comprising:
receiving, on a computing device (100, 110, 120) in an environment (180), a sound recording of sounds (191, 192, 193, 194, 195) in the environment (180);
determining, using one or more pre-trained sound models (151, 152, 153, 154, 1220) of a personalization module (1240, 1805), an embedding of the sound recording and a predicted sound class that the sound recording likely belongs;
transmitting a notification to a user device (130) that indicates the received sound recording, wherein the notification prompts a user of the user device (130) to indicate whether to personalize the sound recording;
receiving a response to the notification, wherein the response indicates that the user wishes to personalize the sound recording;
receiving a label corresponding to the received sound recording from the user of the user device (130); and
fine-tuning the personalization module (1240, 1805) based on the received label, the embedding, and the predicted sound class of the sound recording;
wherein the personalization module (1240, 1805) comprises fine-tuning layers for fine-tuning the one or more pre-trained sound models (151, 152, 153, 154, 1220), and wherein fine-tuning the personalization module (1240) comprises fine-tuning the fine-tuning layers (1510).

2. The computer-implemented method of claim 1, further comprising determining whether to transmit the notification concerning the sound recording to the user device (130) based on determining that the predicted sound class that the sound recording likely belongs is a desired sound class.

3. The computer-implemented method of claim 2, further comprising prompting the user of the user device (130) to select from a plurality of desired sound classes for detecting sounds in the environment (180).

4. The computer-implemented method of claim 2, further comprising prompting the user of the user device (130) to select from a plurality of detection modes (1310, 1320, 1330, 1340) for detecting sounds (191, 192, 193, 194, 195) in the environment (180), wherein each of the plurality of detection modes (1310, 1320, 1330, 1340) includes one or more sound classes.

5. The computer-implemented method of claim 1, further comprising receiving a response to the notification, wherein the response indicates that the user does not wish to personalize the sound recording.

6. The computer-implemented method of claim 5, further comprising storing a sound clip that includes at least a portion of the sound recording as a negative sound clip, and/or
adding the predicted sound class and the embedding of the sound recording to a list of undesired sound classes and embeddings.

7. The computer-implemented method of claim 1, further comprising prompting the user to input the label corresponding to the received sound recording.

8. The computer-implemented method of claim 7, further comprising storing a sound clip that includes at least a portion of the sound recording and the label.

9. The computer-implemented method of claim 7, further comprising storing the embedding of the sound recording and the predicted sound class that the sound recording likely belongs with the label, and wherein the method further comprises:
receiving a second sound recording of sounds (191, 192, 193, 194, 195) in the environment (180);
determining, using the one or more pre-trained sound models (151, 152, 153, 154, 1220) of the personalization module (1240, 1805), a second embedding of the second sound recording and a second predicted sound class that the second sound recording likely belongs;
determining a distance between the second embedding of the second sound recording and the stored embedding of the sound recording; and
transmitting the notification to the user device (130) that indicates the second sound recording based on the determined distance.

10. The computer-implemented method of claim 1, further comprising:
prompting the user of the user device (130) to indicate whether the predicted sound class for the sound recording is accurate; and
receiving a response from the user of the user device (130) indicating whether the predicted sound class for the sound recording is accurate, wherein a sound clip that includes at least a portion of the sound recording is stored as a negative sound clip based on the response indicating that the predicted sound class for the sound recording is inaccurate and wherein the sound clip is stored as a positive sound clip with the label based on the response indicating that the predicted sound class for the sound recording is accurate.

11. The computer-implemented method of claim 10, wherein the personalization module (1240, 1805) further comprises fine-tuning layers and wherein the fine-tuning layers are configured to fine-tune the one or more pre-trained sound models (151, 152, 153, 154, 1220) using at least the positive sound clip and the negative sound clip.

12. The computer-implemented method of claim 1, further comprising:
prompting the user of the user device (130) to indicate whether the predicted sound class for the sound recording is accurate; and
receiving a response from the user of the user device (130) indicating whether the predicted sound class for the sound recording is accurate, wherein the embedding of the sound recording, the predicted sound class that the sound recording likely belongs, and the label are stored as negative examples based on the response indicating that the predicted sound class for the sound recording is inaccurate and wherein the embedding of the sound recording, the predicted sound class that the sound recording likely belongs, and the label are stored as positive examples based on the response indicating that the predicted sound class for the sound recording is accurate.

13. The computer-implemented method of claim 1, wherein the sound recording made in the environment (180) is automatically recorded by the computing device (100, 110, 120) from a plurality of computing devices (100, 110, 120) in the environment (180) and wherein each of the plurality of computing devices (100, 110, 120) has an audio input device, and
wherein the computing device (100, 110, 120) and plurality of devices are members of an environment-specific network for the environment (180), and wherein the sound recording, the label, and information associated with the sound recording in the environment (180) are stored on devices that are members of the environment-specific network for the environment (180).

14. A computer-implemented system for personalized sound discovery, the system comprising:
a computing device (100, 110, 120) in an environment (180) that is configured to:
receive a sound recording of sounds (191, 192, 193, 194, 195) in the environment (180);
determine, using one or more pre-trained sound models (151, 152, 153, 154, 1220) of a personalization module (1240, 1805), an embedding of the sound recording and a predicted sound class that the sound recording likely belongs;
transmit a notification to a user device (130) that indicates the received sound recording, wherein the notification prompts a user of the user device (130) to indicate whether to personalize the sound recording;
receive a response to the notification, wherein the response indicates that the user wishes to personalize the sound recording;
receive a label corresponding to the received sound recording from the user of the user device (130); and
fine-tune the personalization module (1240, 1805) based on the received label, the embedding, and the predicted sound class of the sound recording;
wherein the personalization module (1240, 1805) comprises fine-tuning layers for fine-tuning the one or more pre-trained sound models (151, 152, 153, 154, 1220), and wherein fine-tuning the personalization module (1240) comprises fine-tuning the fine-tuning layers (1510).

15. A non-transitory computer-readable medium containing computer executable instructions that, when executed by a processor, cause the processor to perform a method for personalized sound discovery, the method comprising:
receiving, on a computing device (100, 110, 120) in an environment (180), a sound recording of sounds (191, 192, 193, 194, 195) in the environment (180);
determining, using one or more pre-trained sound models (151, 152, 153, 154, 1220) of a personalization module (1240, 1805), an embedding of the sound recording and a predicted sound class that the sound recording likely belongs;
transmitting a notification to a user device (130) that indicates the received sound recording, wherein the notification prompts a user of the user device (130) to indicate whether to personalize the sound recording;
receiving a response to the notification, wherein the response indicates that the user wishes to personalize the sound recording;
receiving a label corresponding to the received sound recording from the user of the user device (130); and
fine-tuning the personalization module (1240, 1805) based on the received label, the embedding, and the predicted sound class of the sound recording;
wherein the personalization module (1240, 1805) comprises fine-tuning layers for fine-tuning the one or more pre-trained sound models (151, 152, 153, 154, 1220), and wherein fine-tuning the personalization module (1240) comprises fine-tuning the fine-tuning layers (1510).

## Patentansprüche

1. Computerimplementiertes Verfahren zur personalisierten Tonentdeckung, das von einer Datenverarbeitungseinrichtung durchgeführt wird, wobei das Verfahren umfasst:
Empfangen, auf einer Rechenvorrichtung (100, 110, 120) in einer Umgebung (180), einer Tonaufnahme von Tönen (191, 192, 193, 194, 195) in der Umgebung (180);
Bestimmen, unter Verwendung eines oder mehrerer vortrainierter Tonmodelle (151, 152, 153, 154, 1220) eines Personalisierungsmoduls (1240, 1805), einer Einbettung der Tonaufnahme und einer vorhergesagten Tonklasse, zu der die Tonaufnahme wahrscheinlich gehört;
Übermitteln einer Benachrichtigung an eine Benutzervorrichtung (130), die die empfangene Tonaufnahme angibt, wobei die Benachrichtigung einen Benutzer der Benutzervorrichtung (130) dazu promptet, anzugeben, ob die Tonaufnahme personalisiert werden soll;
Empfangen einer Antwort auf die Benachrichtigung, wobei die Antwort angibt, dass der Benutzer die Tonaufnahme personalisieren möchte;
Empfangen eines Labels, das der empfangenen Tonaufnahme entspricht, von dem Benutzer der Benutzervorrichtung (130); und Feinabstimmen des Personalisierungsmoduls (1240, 1805) basierend auf dem empfangenen Label, der Einbettung und der vorhergesagten Tonklasse der Tonaufnahme;
wobei das Personalisierungsmodul (1240, 1805) Feinabstimmungsschichten zum Feinabstimmen des einen oder der mehreren vortrainierten Tonmodelle (151, 152, 153, 154, 1220) umfasst und wobei Feinabstimmen des Personalisierungsmoduls (1240) Feinabstimmen der Feinabstimmungsschichten (1510) umfasst.

2. Computerimplementiertes Verfahren nach Anspruch 1, ferner umfassend Bestimmen, ob die Benachrichtigung über die Tonaufnahme an die Benutzervorrichtung (130) übermittelt werden soll, basierend auf dem Bestimmen, dass die vorhergesagte Tonklasse, zu der die Tonaufnahme wahrscheinlich gehört, eine gewünschte Tonklasse ist.

3. Computerimplementiertes Verfahren nach Anspruch 2, ferner umfassend Prompten des Benutzers der Benutzervorrichtung (130), aus einer Mehrzahl von gewünschten Tonklassen zum Erkennen von Tönen in der Umgebung (180) auszuwählen.

4. Computerimplementiertes Verfahren nach Anspruch 2, ferner umfassend Prompten des Benutzers der Benutzervorrichtung (130), aus einer Mehrzahl von Erkennungsmodi (1310, 1320, 1330, 1340) zum Erkennen von Tönen (191, 192, 193, 194, 195) in der Umgebung (180) auszuwählen, wobei jeder der Mehrzahl von Erkennungsmodi (1310, 1320, 1330, 1340) eine oder mehrere Tonklassen einschließt.

5. Computerimplementiertes Verfahren nach Anspruch 1, ferner umfassend Empfangen einer Antwort auf die Benachrichtigung, wobei die Antwort angibt, dass der Benutzer die Tonaufnahme nicht personalisieren möchte.

6. Computerimplementiertes Verfahren nach Anspruch 5, ferner umfassend Speichern eines Tonclips, der mindestens einen Abschnitt der Tonaufnahme einschließt, als negativen Tonclip, und/oder
Hinzufügen der vorhergesagten Tonklasse und der Einbettung der Tonaufnahme zu einer Liste unerwünschter Tonklassen und Einbettungen.

7. Computerimplementiertes Verfahren nach Anspruch 1, ferner umfassend Prompten des Benutzers, das der empfangenen Tonaufnahme entsprechende Label einzugeben.

8. Computerimplementiertes Verfahren nach Anspruch 7, ferner umfassend Speichern eines Tonclips, der mindestens einen Abschnitt der Tonaufnahme und das Label einschließt.

9. Computerimplementiertes Verfahren nach Anspruch 7, ferner umfassend Speichern der Einbettung der Tonaufnahme und der vorhergesagten Tonklasse, zu der die Tonaufnahme wahrscheinlich gehört, zusammen mit dem Label, wobei das Verfahren ferner Folgendes umfasst:
Empfangen einer zweiten Tonaufnahme von Tönen (191, 192, 193, 194, 195) in der Umgebung (180);
Bestimmen, unter Verwendung des einen oder der mehreren vortrainierten Tonmodelle (151, 152, 153, 154, 1220) des Personalisierungsmoduls (1240, 1805), einer zweiten Einbettung der zweiten Tonaufnahme und einer zweiten vorhergesagten Tonklasse, zu der die zweite Tonaufnahme wahrscheinlich gehört; Bestimmen eines Abstands zwischen der zweiten Einbettung der zweiten Tonaufnahme und der gespeicherten Einbettung der Tonaufnahme; und
Übermitteln der Benachrichtigung an die Benutzervorrichtung (130), die die zweite Tonaufnahme basierend auf dem bestimmten Abstand angibt.

10. Computerimplementiertes Verfahren nach Anspruch 1, ferner umfassend:
Prompten des Benutzers der Benutzervorrichtung (130), anzugeben, ob die vorhergesagte Tonklasse für die Tonaufnahme zutreffend ist; und
Empfangen einer Antwort von dem Benutzer der Benutzervorrichtung (130), die angibt, ob die vorhergesagte Tonklasse für die Tonaufnahme zutreffend ist, wobei ein Tonclip, der mindestens einen Abschnitt der Tonaufnahme einschließt, als negativer Tonclip gespeichert wird, basierend darauf, dass die Antwort angibt, dass die vorhergesagte Tonklasse für die Tonaufnahme nicht zutreffend ist, und wobei der Tonclip als positiver Tonclip mit dem Label gespeichert wird, basierend darauf, dass die Antwort angibt, dass die vorhergesagte Tonklasse für die Tonaufnahme zutreffend ist.

11. Computerimplementiertes Verfahren nach Anspruch 10, wobei das Personalisierungsmodul (1240, 1805) ferner Feinabstimmungsschichten umfasst und wobei die Feinabstimmungsschichten konfiguriert sind, um das eine oder die mehreren vortrainierten Tonmodelle (151, 152, 153, 154, 1220) unter Verwendung mindestens des positiven Tonclips und des negativen Tonclips feinabzustimmen.

12. Computerimplementiertes Verfahren nach Anspruch 1, ferner umfassend:
Prompten des Benutzers der Benutzervorrichtung (130), anzugeben, ob die vorhergesagte Tonklasse für die Tonaufnahme zutreffend ist; und
Empfangen einer Antwort von dem Benutzer der Benutzervorrichtung (130), die angibt, ob die vorhergesagte Tonklasse für die Tonaufnahme zutreffend ist, wobei die Einbettung der Tonaufnahme, die vorhergesagte Tonklasse, zu der die Tonaufnahme wahrscheinlich gehört, und das Label als negative Beispiele gespeichert werden, basierend darauf, dass die Antwort angibt, dass die vorhergesagte Tonklasse für die Tonaufnahme nicht zutreffend ist, und wobei die Einbettung der Tonaufnahme, die vorhergesagte Tonklasse, zu der die Tonaufnahme wahrscheinlich gehört, und das Label als positive Beispiele gespeichert werden, basierend darauf, dass die Antwort angibt, dass die vorhergesagte Tonklasse für die Tonaufnahme zutreffend ist.

13. Computerimplementiertes Verfahren nach Anspruch 1, wobei die in der Umgebung (180) erstellte Tonaufnahme automatisch von der Rechenvorrichtung (100, 110, 120) aus einer Mehrzahl von Rechenvorrichtungen (100, 110, 120) in der Umgebung (180) aufgezeichnet wird und wobei jede der Mehrzahl von Rechenvorrichtungen (100, 110, 120) eine Audioeingabevorrichtung aufweist, und
wobei die Rechenvorrichtung (100, 110, 120) und die Mehrzahl von Vorrichtungen Mitglieder eines umgebungsspezifischen Netzwerks für die Umgebung (180) sind und wobei die Tonaufnahme, das Label und mit der Tonaufnahme in der Umgebung (180) verknüpfte Informationen auf Vorrichtungen gespeichert sind, die Mitglieder des umgebungsspezifischen Netzwerks für die Umgebung (180) sind.

14. Computerimplementiertes System zur personalisierten Tonentdeckung, wobei das System umfasst:
eine Rechenvorrichtung (100, 110, 120) in einer Umgebung (180), die konfiguriert ist, um:
eine Tonaufnahme von Tönen (191, 192, 193, 194, 195) in der Umgebung (180) zu empfangen;
unter Verwendung eines oder mehrerer vortrainierter Tonmodelle (151, 152, 153, 154, 1220) eines Personalisierungsmoduls (1240, 1805) eine Einbettung der Tonaufnahme und eine vorhergesagte Tonklasse, zu der die Tonaufnahme wahrscheinlich gehört, zu bestimmen;
eine Benachrichtigung an eine Benutzervorrichtung (130) zu übermitteln, die die empfangene Tonaufnahme angibt, wobei die Benachrichtigung einen Benutzer der Benutzervorrichtung (130) dazu promptet, anzugeben, ob die Tonaufnahme personalisiert werden soll;
eine Antwort auf die Benachrichtigung zu empfangen, wobei die Antwort angibt, dass der Benutzer die Tonaufnahme personalisieren möchte;
ein Label, das der empfangenen Tonaufnahme entspricht, von dem Benutzer der Benutzervorrichtung (130) zu empfangen; und
das Personalisierungsmodul (1240, 1805) basierend auf dem empfangenen Label, der Einbettung und der vorhergesagten Tonklasse der Tonaufnahme feinabzustimmen;
wobei das Personalisierungsmodul (1240, 1805) Feinabstimmungsschichten zum Feinabstimmen des einen oder der mehreren vortrainierten Tonmodelle (151, 152, 153, 154, 1220) umfasst und wobei Feinabstimmen des Personalisierungsmoduls (1240) Feinabstimmen der Feinabstimmungsschichten (1510) umfasst.

15. Nichtflüchtiges computerlesbares Medium, das computerausführbare Anweisungen enthält, die, wenn sie von einem Prozessor ausgeführt werden, den Prozessor veranlassen, ein Verfahren zur personalisierten Tonentdeckung durchzuführen, wobei das Verfahren umfasst:
Empfangen, auf einer Rechenvorrichtung (100, 110, 120) in einer Umgebung (180), einer Tonaufnahme von Tönen (191, 192, 193, 194, 195) in der Umgebung (180);
Bestimmen, unter Verwendung eines oder mehrerer vortrainierter Tonmodelle (151, 152, 153, 154, 1220) eines Personalisierungsmoduls (1240, 1805), einer Einbettung der Tonaufnahme und einer vorhergesagten Tonklasse, zu der die Tonaufnahme wahrscheinlich gehört;
Übermitteln einer Benachrichtigung an eine Benutzervorrichtung (130), die die empfangene Tonaufnahme angibt, wobei die Benachrichtigung einen Benutzer der Benutzervorrichtung (130) dazu promptet, anzugeben, ob die Tonaufnahme personalisiert werden soll;
Empfangen einer Antwort auf die Benachrichtigung, wobei die Antwort angibt, dass der Benutzer die Tonaufnahme personalisieren möchte;
Empfangen eines Labels, das der empfangenen Tonaufnahme entspricht, von dem Benutzer der Benutzervorrichtung (130); und Feinabstimmen des Personalisierungsmoduls (1240, 1805) basierend auf dem empfangenen Label, der Einbettung und der vorhergesagten Tonklasse der Tonaufnahme;
wobei das Personalisierungsmodul (1240, 1805) Feinabstimmungsschichten zum Feinabstimmen des einen oder der mehreren vortrainierten Tonmodelle (151, 152, 153, 154, 1220) umfasst und wobei Feinabstimmen des Personalisierungsmoduls (1240) Feinabstimmen der Feinabstimmungsschichten (1510) umfasst.

## Revendications

1. Procédé mis en œuvre par ordinateur pour la découverte personnalisée de sons, exécuté par un appareil de traitement de données, le procédé comprenant :
la réception, sur un dispositif informatique (100, 110, 120) dans un environnement (180), d'un enregistrement sonore de sons (191, 192, 193, 194, 195) dans l'environnement (180) ;
la détermination, à l'aide d'un ou plusieurs modèles sonores pré-entraînés (151, 152, 153, 154, 1220) d'un module de personnalisation (1240, 1805), d'une intégration de l'enregistrement sonore et d'une classe sonore prédite à laquelle l'enregistrement sonore est susceptible d'appartenir ;
la transmission d'une notification à un dispositif utilisateur (130) indiquant l'enregistrement sonore reçu, dans lequel la notification invite un utilisateur du dispositif utilisateur (130) à indiquer s'il souhaite personnaliser l'enregistrement sonore ;
la réception d'une réponse à la notification, dans lequel la réponse indique que l'utilisateur souhaite personnaliser l'enregistrement sonore ;
la réception d'une étiquette correspondant à l'enregistrement sonore reçu de l'utilisateur du dispositif utilisateur (130) ; et
le réglage fin du module de personnalisation (1240, 1805) sur la base de l'étiquette reçue, de l'intégration et de la classe sonore prédite de l'enregistrement sonore ;
dans lequel le module de personnalisation (1240, 1805) comprend des couches de réglage fin pour le réglage fin des un ou plusieurs modèles sonores pré-entraînés (151, 152, 153, 154, 1220), et dans lequel le réglage fin du module de personnalisation (1240) comprend le réglage fin des couches de réglage fin (1510).

2. Procédé mis en œuvre par ordinateur selon la revendication 1, comprenant en outre le fait de déterminer s'il faut transmettre la notification concernant l'enregistrement sonore au dispositif utilisateur (130) sur la base de la détermination du fait que la classe sonore prévue à laquelle l'enregistrement sonore est susceptible d'appartenir est une classe sonore souhaitée.

3. Procédé mis en œuvre par ordinateur selon la revendication 2, comprenant en outre le fait d'inviter l'utilisateur du dispositif utilisateur (130) à sélectionner parmi une pluralité de classes sonores souhaitées pour détecter les sons dans l'environnement (180).

4. Procédé mis en œuvre par ordinateur selon la revendication 2, comprenant en outre le fait d'inviter l'utilisateur du dispositif utilisateur (130) à sélectionner parmi une pluralité de modes de détection (1310, 1320, 1330, 1340) pour détecter les sons (191, 192, 193, 194, 195) dans l'environnement (180), dans lequel chacun de la pluralité de modes de détection (1310, 1320, 1330, 1340) comporte une ou plusieurs classes de sons.

5. Procédé mis en œuvre par ordinateur selon la revendication 1, comprenant en outre la réception d'une réponse à la notification, dans lequel la réponse indique que l'utilisateur ne souhaite pas personnaliser l'enregistrement sonore.

6. Procédé mis en œuvre par ordinateur selon la revendication 5, comprenant en outre le stockage d'un extrait sonore comportant au moins une partie de l'enregistrement sonore sous forme d'extrait sonore négatif, et/ou
l'ajout de la classe sonore prédite et de l'intégration de l'enregistrement sonore à une liste de classes sonores et d'intégrations non désirées.

7. Procédé mis en œuvre par ordinateur selon la revendication 1, comprenant en outre l'invitation faite à l'utilisateur de saisir l'étiquette correspondant à l'enregistrement sonore reçu.

8. Procédé mis en œuvre par ordinateur selon la revendication 7, comprenant en outre le stockage d'un extrait sonore comportant au moins une partie de l'enregistrement sonore et l'étiquette.

9. Procédé mis en œuvre par ordinateur selon la revendication 7, comprenant en outre le stockage de l'intégration de l'enregistrement sonore et de la classe sonore prédite à laquelle l'enregistrement sonore est susceptible d'appartenir avec l'étiquette, et dans lequel le procédé comprend en outre :
la réception d'un second enregistrement sonore de sons (191, 192, 193, 194, 195) dans l'environnement (180) ;
la détermination, à l'aide des un ou plusieurs modèles sonores pré-entraînés (151, 152, 153, 154, 1220) du module de personnalisation (1240, 1805), d'une seconde intégration du second enregistrement sonore et une seconde classe sonore prédite à laquelle le second enregistrement sonore est susceptible d'appartenir ;
la détermination d'une distance entre la seconde insertion du second enregistrement sonore et l'insertion stockée de l'enregistrement sonore ; et
la transmission de la notification au dispositif utilisateur (130) qui indique le second enregistrement sonore sur la base de la distance déterminée.

10. Procédé mis en œuvre par ordinateur selon la revendication 1, comprenant en outre :
l'invitation de l'utilisateur du dispositif utilisateur (130) à indiquer si la classe sonore prédite pour l'enregistrement sonore est exacte ; et
la réception d'une réponse de l'utilisateur du dispositif utilisateur (130) indiquant si la classe sonore prédite pour l'enregistrement sonore est exacte, dans lequel un extrait sonore qui comporte au moins une partie de l'enregistrement sonore est stocké comme un extrait sonore négatif sur le base de la réponse indiquant que la classe sonore prédite pour l'enregistrement sonore est inexacte et dans lequel l'extrait sonore est stocké comme un extrait sonore positif avec l'étiquette sur la base de la réponse indiquant que la classe sonore prédite pour l'enregistrement sonore est exacte.

11. Procédé mis en œuvre par ordinateur selon la revendication 10, dans lequel le module de personnalisation (1240, 1805) comprend en outre des couches de réglage fin et dans lequel les couches de réglage fin sont configurées pour régler finement le ou les modèles sonores pré-entraînés (151, 152, 153, 154, 1220) à l'aide au moins de l'extrait sonore positif et l'extrait sonore négatif.

12. Procédé mis en œuvre par ordinateur selon la revendication 1, comprenant en outre :
l'invitation de l'utilisateur du dispositif utilisateur (130) à indiquer si la classe sonore prédite pour l'enregistrement sonore est exacte ; et
la réception d'une réponse de l'utilisateur du dispositif utilisateur (130) indiquant si la classe sonore prédite pour l'enregistrement sonore est exacte, dans lequel l'intégration de l'enregistrement sonore, la classe sonore prédite à laquelle l'enregistrement sonore est susceptible d'appartenir et l'étiquette sont stockées comme exemples négatifs sur la base de la réponse indiquant que la classe sonore prédite pour l'enregistrement sonore est inexacte et dans lequel l'intégration de l'enregistrement sonore, la classe sonore prédite à laquelle l'enregistrement sonore est susceptible d'appartenir et l'étiquette sont stockées comme exemples positifs sur la base de la réponse indiquant que la classe sonore prédite pour l'enregistrement sonore est exacte.

13. Procédé mis en œuvre par ordinateur selon la revendication 1, dans lequel l'enregistrement sonore effectué dans l'environnement (180) est automatiquement enregistré par le dispositif informatique (100, 110, 120) à partir d'une pluralité de dispositifs informatiques (100, 110, 120) dans l'environnement (180) et dans lequel chacun de la pluralité de dispositifs informatiques (100, 110, 120) dispose d'un dispositif d'entrée audio, et
dans lequel le dispositif informatique (100, 110, 120) et une pluralité de dispositifs sont membres d'un réseau spécifique à l'environnement pour l'environnement (180), et dans lequel l'enregistrement sonore, l'étiquette et les informations associées à l'enregistrement sonore dans l'environnement (180) sont stockés sur des dispositifs qui sont membres du réseau spécifique à l'environnement pour l'environnement (180).

14. Système mis en œuvre par ordinateur destiné à la découverte personnalisée de sons, le système comprenant :
un dispositif informatique (100, 110, 120) dans un environnement (180) configuré pour :
réceptionner un second enregistrement sonore de sons (191, 192, 193, 194, 195) dans l'environnement (180) ;
déterminer, à l'aide d'un ou de plusieurs modèles sonores pré-entraînés (151, 152, 153, 154, 1220) d'un module de personnalisation (1240, 1805), une intégration de l'enregistrement sonore et une classe sonore prédite à laquelle l'enregistrement sonore est susceptible d'appartenir ;
transmettre une notification à un dispositif utilisateur (130) indiquant l'enregistrement sonore reçu, dans lequel la notification invite l'utilisateur du dispositif utilisateur (130) à indiquer s'il souhaite personnaliser l'enregistrement sonore ;
recevoir une réponse à la notification, dans lequel la réponse indique que l'utilisateur souhaite personnaliser l'enregistrement sonore ;
recevoir une étiquette correspondant à l'enregistrement sonore reçu de l'utilisateur du dispositif utilisateur (130) ; et
régler finement le module de personnalisation (1240, 1805) sur la base de l'étiquette reçue, de l'intégration et de la classe sonore prédite de l'enregistrement sonore ;
dans lequel le module de personnalisation (1240, 1805) comprend des couches de réglage fin pour le réglage fin des un ou plusieurs modèles sonores pré-entraînés (151, 152, 153, 154, 1220), et dans lequel le réglage fin du module de personnalisation (1240) comprend le réglage fin des couches de réglage fin (1510).

15. Support non transitoire lisible par ordinateur contenant des instructions exécutables par ordinateur qui, lorsqu'elles sont exécutées par un processeur, amènent le processeur à exécuter un procédé de découverte sonore personnalisée, le procédé comprenant :
la réception, sur un dispositif informatique (100, 110, 120) dans un environnement (180), d'un enregistrement sonore de sons (191, 192, 193, 194, 195) dans l'environnement (180) ;
la détermination, à l'aide d'un ou plusieurs modèles sonores pré-entraînés (151, 152, 153, 154, 1220) d'un module de personnalisation (1240, 1805), d'une intégration de l'enregistrement sonore et d'une classe sonore prédite à laquelle l'enregistrement sonore est susceptible d'appartenir ;
la transmission d'une notification à un dispositif utilisateur (130) indiquant l'enregistrement sonore reçu, dans lequel la notification invite un utilisateur du dispositif utilisateur (130) à indiquer s'il souhaite personnaliser l'enregistrement sonore ;
la réception d'une réponse à la notification, dans lequel la réponse indique que l'utilisateur souhaite personnaliser l'enregistrement sonore ;
la réception d'une étiquette correspondant à l'enregistrement sonore reçu de l'utilisateur du dispositif utilisateur (130) ; et
le réglage fin du module de personnalisation (1240, 1805) sur la base de l'étiquette reçue sur la base de l'étiquette reçue, de l'intégration et de la classe sonore prédite de l'enregistrement sonore ;
dans lequel le module de personnalisation (1240, 1805) comprend des couches de réglage fin pour le réglage fin des un ou de plusieurs modèles sonores pré-entraînés (151, 152, 153, 154, 1220), et dans lequel le réglage fin du module de personnalisation (1240) comprend le réglage fin des couches de réglage fin (1510).
